# EUROPEAN PATENT APPLICATION

(11) **EP 4 598 111 A1**
(43) Date of publication of application: **06.08.2025**
(21) Application number: 23870683.2
(22) Date of filing: 25.09.2023
(51) Int. Cl.: H04W 28/02

(54) **INFORMATION PROCESSING METHOD AND COMMUNICATION DEVICE**

(30) Priority: 29.09.2022 CN 202211205116
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Cabinet Beaumont
(86) International application number: PCT/CN2023/120977
(87) International publication number: WO 2024/067452

(57) **Abstract**

An information processing method and a communication device are provided. A method applied to a first communication device includes: performing, by a first communication device, a first operation, where the first operation includes at least one of the following: determining data packet detection information, where the data packet detection information includes at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information; sending the data packet detection information; mapping a plurality of data flows to a same QoS flow; mapping a data flow 1 and a data flow 2 to different QoS flows; configuring an N^{th} requirement for a QoS flow; and sending the N^{th} requirement corresponding to the QoS flow.

## Description

### CROSS-REFERENCE TO RELATED APPLICATIONS

This application claims priority to Chinese Patent Application No. 202211205116.X, filed on September 29, 2022 and entitled "INFORMATION PROCESSING METHOD AND COMMUNICATION DEVICE", which is incorporated herein by reference in its entirety.

### TECHNICAL FIELD

Embodiments of this application relate to the field of wireless communication technologies, and in particular, to an information processing method and a communication device.

### BACKGROUND

In an explicit congestion notification (Explicit Congestion Notification, ECN) marking technology, a congestion mark may be set in a data transmission path, so that a transmit-end side (for example, a client and a server) obtains useful congestion information to alleviate congestion. Low latency, low loss, scalable throughput (low latency, low loss, scalable throughput, L4S) supports more flexible congestion control on the basis of the ECN marking technology.

A mobile cellular network (for example, a 5GS) is a segment of a transmission path between terminals or servers, and radio resources are often a bottleneck of communication. How to better support, in the mobile cellular network segment, a technology corresponding to congestion marking is a problem that needs to be resolved in this application.

### SUMMARY

Embodiments of this application provide an information processing method and a communication device, to resolve a problem of how to better support, in a mobile cellular network segment, a technology corresponding to congestion marking.

According to a first aspect, an information processing method is provided. The method is applied to a first communication device, and the method includes:
performing, by a first communication device, a first operation, where the first operation includes at least one of the following:
determining data packet detection information, where the data packet detection information includes at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information;
sending the data packet detection information;
mapping a plurality of data flows to a same QoS flow;
mapping a data flow 1 and a data flow 2 to different QoS flows;
configuring an N^{th} requirement for a QoS flow; and
sending the N^{th} requirement corresponding to the QoS flow, where
a value of N is one of the following: 1, 2, 3, 4, 5, 6, and 7;
the first requirement is used to require one of the following: performing an ECN operation for L4S on an uplink, and performing a congestion monitoring and/or congestion reporting operation on the uplink;
the second requirement is used to require one of the following: performing the ECN operation for L4S on a downlink, and performing the congestion monitoring and/or congestion reporting operation on the downlink;
the third requirement is used to require one of the following: performing the ECN operation for L4S on the uplink and/or the downlink, and performing the congestion monitoring and/or congestion reporting operation on the uplink and/or the downlink;
the fourth requirement is used to require one of the following: performing a first ECN operation on the uplink, and performing the congestion monitoring and/or congestion reporting operation on the uplink;
the fifth requirement is used to require one of the following: performing the first ECN operation on the downlink, and performing the congestion monitoring and/or congestion reporting operation on the downlink; and
the sixth requirement is used to require one of the following: performing the first ECN operation on the uplink and/or the downlink, and performing the congestion monitoring and/or congestion reporting operation on the uplink and/or the downlink.

According to a second aspect, an information processing method is provided. The method is applied to a second communication device, and the method includes:
performing, by a second communication device, a second operation, where the second operation includes at least one of the following:
determining policy control request trigger information, where the policy control request trigger information is used to require reporting to be performed in a case that a data flow that conforms to data packet detection information is detected;
determining the data packet detection information, where the data packet detection information is used to detect a data flow that conforms to the data packet detection information;
sending the data packet detection information;
sending the policy control request trigger information; and
configuring an N^{th} requirement for a data flow, where
the data packet detection information includes at least one of the following: ECN information, first data packet detection information, second data packet detection information, third data packet detection information, fourth data packet detection information, fifth data packet detection information, sixth data packet detection information, seventh data packet detection information, eighth data packet detection information, and ninth data packet detection information;
a value of N is one of the following: 1, 2, 3, 4, 5, 6, and 7;
the first requirement is used to require one of the following: performing an ECN operation for L4S on an uplink, and performing a congestion monitoring and/or congestion reporting operation on the uplink;
the second requirement is used to require one of the following: performing the ECN operation for L4S on a downlink, and performing the congestion monitoring and/or congestion reporting operation on the downlink;
the third requirement is used to require one of the following: performing the ECN operation for L4S on the uplink and/or the downlink, and performing the congestion monitoring and/or congestion reporting operation on the uplink and/or the downlink;
the fourth requirement is used to require one of the following: performing a first ECN operation on the uplink, and performing the congestion monitoring and/or congestion reporting operation on the uplink;
the fifth requirement is used to require one of the following: performing the first ECN operation on the downlink, and performing the congestion monitoring and/or congestion reporting operation on the downlink; and
the sixth requirement is used to require one of the following: performing the first ECN operation on the uplink and/or the downlink, and performing the congestion monitoring and/or congestion reporting operation on the uplink and/or the downlink.

According to a third aspect, an information processing method is provided. The method is applied to a third communication device, and the method includes:
obtaining, by a third communication device, data packet detection information, where the data packet detection information is used to detect a data flow that conforms to the data packet detection information; and
performing a third operation based on the data packet detection information, where the third operation includes:
   detecting or filtering a target data flow;
   reporting first information in a case that the target data flow is detected, where the first information is used to indicate that the target data flow starts; and
   reporting second information in a case that the target data flow is no longer detected, where the second information is used to indicate that the target data flow ends, where
   the target data flow is a data flow that conforms to the data packet detection information; and
   the data packet detection information includes at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information.

According to a fourth aspect, an information processing method is provided. The method is applied to a fourth communication device, and the method includes:
performing, by a fourth communication device, a fourth operation, where the performing a fourth operation includes at least one of the following:
performing a congestion monitoring and/or congestion reporting operation on an uplink;
performing the congestion monitoring and/or congestion reporting operation on a downlink; and
performing the congestion monitoring and/or congestion reporting operation on the uplink and the downlink.

According to a fifth aspect, an information processing apparatus is provided. The apparatus includes:
a processing module, configured to perform a first operation, where the first operation includes at least one of the following:
determining data packet detection information, where the data packet detection information includes at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information;
sending the data packet detection information;
mapping a plurality of data flows to a same QoS flow;
mapping a data flow 1 and a data flow 2 to different QoS flows;
configuring an N^{th} requirement for a QoS flow; and
sending the N^{th} requirement corresponding to the QoS flow, where
a value of N is one of the following: 1, 2, 3, 4, 5, 6, and 7;
the first requirement is used to require one of the following: performing an ECN operation for L4S on an uplink, and performing a congestion monitoring and/or congestion reporting operation on the uplink;
the second requirement is used to require one of the following: performing the ECN operation for L4S on a downlink, and performing the congestion monitoring and/or congestion reporting operation on the downlink;
the third requirement is used to require one of the following: performing the ECN operation for L4S on the uplink and/or the downlink, and performing the congestion monitoring and/or congestion reporting operation on the uplink and/or the downlink;
the fourth requirement is used to require one of the following: performing a first ECN operation on the uplink, and performing the congestion monitoring and/or congestion reporting operation on the uplink;
the fifth requirement is used to require one of the following: performing the first ECN operation on the downlink, and performing the congestion monitoring and/or congestion reporting operation on the downlink; and
the sixth requirement is used to require one of the following: performing the first ECN operation on the uplink and/or the downlink, and performing the congestion monitoring and/or congestion reporting operation on the uplink and/or the downlink.

According to a sixth aspect, an information processing apparatus is provided. The apparatus includes:
a processing module, configured to perform a second operation, where the second operation includes at least one of the following:
determining policy control request trigger information, where the policy control request trigger information is used to require reporting to be performed in a case that a data flow that conforms to data packet detection information is detected;
determining the data packet detection information, where the data packet detection information is used to detect a data flow that conforms to the data packet detection information;
sending the data packet detection information;
sending the policy control request trigger information; and
configuring an N^{th} requirement for a data flow, where
the data packet detection information includes at least one of the following: ECN information, first data packet detection information, second data packet detection information, third data packet detection information, fourth data packet detection information, fifth data packet detection information, sixth data packet detection information, seventh data packet detection information, eighth data packet detection information, and ninth data packet detection information;
a value of N is one of the following: 1, 2, 3, 4, 5, 6, and 7;
the first requirement is used to require one of the following: performing an ECN operation for L4S on an uplink, and performing a congestion monitoring and/or congestion reporting operation on the uplink;
the second requirement is used to require one of the following: performing the ECN operation for L4S on a downlink, and performing the congestion monitoring and/or congestion reporting operation on the downlink;
the third requirement is used to require one of the following: performing the ECN operation for L4S on the uplink and/or the downlink, and performing the congestion monitoring and/or congestion reporting operation on the uplink and/or the downlink;
the fourth requirement is used to require one of the following: performing a first ECN operation on the uplink, and performing the congestion monitoring and/or congestion reporting operation on the uplink;
the fifth requirement is used to require one of the following: performing the first ECN operation on the downlink, and performing the congestion monitoring and/or congestion reporting operation on the downlink; and
the sixth requirement is used to require one of the following: performing the first ECN operation on the uplink and/or the downlink, and performing the congestion monitoring and/or congestion reporting operation on the uplink and/or the downlink.

According to a seventh aspect, an information processing apparatus is provided. The apparatus includes:
a processing module, configured to: obtain data packet detection information, where the data packet detection information is used to detect a data flow that conforms to the data packet detection information; and
perform a third operation based on the data packet detection information, where the third operation includes:
   detecting or filtering a target data flow;
   reporting first information in a case that the target data flow is detected, where the first information is used to indicate that the target data flow starts; and
   reporting second information in a case that the target data flow is no longer detected, where the second information is used to indicate that the target data flow ends, where
   the target data flow is a data flow that conforms to the data packet detection information; and
   the data packet detection information includes at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information.

According to an eighth aspect, an information processing apparatus is provided. The apparatus includes:
a processing module, configured to perform a fourth operation, where the performing a fourth operation includes at least one of the following:
performing a congestion monitoring and/or congestion reporting operation on an uplink;
performing the congestion monitoring and/or congestion reporting operation on a downlink; and
performing the congestion monitoring and/or congestion reporting operation on the uplink and the downlink.

According to a ninth aspect, a first communication device is provided. The first communication device includes a processor and a memory, the memory stores a program or instructions capable of running on the processor, and when the program or the instructions are executed by the processor, the steps of the method according to the first aspect are implemented.

According to a tenth aspect, a first communication device is provided. The first communication device includes a processor and a communication interface. The processor is configured to perform a first operation, where the first operation includes at least one of the following:
determining data packet detection information, where the data packet detection information includes at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information;
sending the data packet detection information;
mapping a plurality of data flows to a same QoS flow;
mapping a data flow 1 and a data flow 2 to different QoS flows;
configuring an N^{th} requirement for a QoS flow; and
sending the N^{th} requirement corresponding to the QoS flow, where
a value of N is one of the following: 1, 2, 3, 4, 5, 6, and 7;
the first requirement is used to require one of the following: performing an ECN operation for L4S on an uplink, and performing a congestion monitoring and/or congestion reporting operation on the uplink;
the second requirement is used to require one of the following: performing the ECN operation for L4S on a downlink, and performing the congestion monitoring and/or congestion reporting operation on the downlink;
the third requirement is used to require one of the following: performing the ECN operation for L4S on the uplink and/or the downlink, and performing the congestion monitoring and/or congestion reporting operation on the uplink and/or the downlink;
the fourth requirement is used to require one of the following: performing a first ECN operation on the uplink, and performing the congestion monitoring and/or congestion reporting operation on the uplink;
the fifth requirement is used to require one of the following: performing the first ECN operation on the downlink, and performing the congestion monitoring and/or congestion reporting operation on the downlink; and
the sixth requirement is used to require one of the following: performing the first ECN operation on the uplink and/or the downlink, and performing the congestion monitoring and/or congestion reporting operation on the uplink and/or the downlink.

According to an eleventh aspect, a second communication device is provided. The second communication device includes a processor and a memory, the memory stores a program or instructions capable of running on the processor, and when the program or the instructions are executed by the processor, the steps of the method according to the second aspect are implemented.

According to a twelfth aspect, a second communication device is provided. The second communication device includes a processor and a communication interface. The processor is configured to perform a second operation, where the second operation includes at least one of the following:
determining policy control request trigger information, where the policy control request trigger information is used to require reporting to be performed in a case that a data flow that conforms to data packet detection information is detected;
determining the data packet detection information, where the data packet detection information is used to detect a data flow that conforms to the data packet detection information;
sending the data packet detection information;
sending the policy control request trigger information; and
configuring an N^{th} requirement for a data flow, where
the data packet detection information includes at least one of the following: ECN information, first data packet detection information, second data packet detection information, third data packet detection information, fourth data packet detection information, fifth data packet detection information, sixth data packet detection information, seventh data packet detection information, eighth data packet detection information, and ninth data packet detection information;
a value of N is one of the following: 1, 2, 3, 4, 5, 6, and 7;
the first requirement is used to require one of the following: performing an ECN operation for L4S on an uplink, and performing a congestion monitoring and/or congestion reporting operation on the uplink;
the second requirement is used to require one of the following: performing the ECN operation for L4S on a downlink, and performing the congestion monitoring and/or congestion reporting operation on the downlink;
the third requirement is used to require one of the following: performing the ECN operation for L4S on the uplink and/or the downlink, and performing the congestion monitoring and/or congestion reporting operation on the uplink and/or the downlink;
the fourth requirement is used to require one of the following: performing a first ECN operation on the uplink, and performing the congestion monitoring and/or congestion reporting operation on the uplink;
the fifth requirement is used to require one of the following: performing the first ECN operation on the downlink, and performing the congestion monitoring and/or congestion reporting operation on the downlink; and
the sixth requirement is used to require one of the following: performing the first ECN operation on the uplink and/or the downlink, and performing the congestion monitoring and/or congestion reporting operation on the uplink and/or the downlink.

According to a thirteenth aspect, a third communication device is provided. The third communication device includes a processor and a memory, the memory stores a program or instructions capable of running on the processor, and when the program or the instructions are executed by the processor, the steps of the method according to the third aspect are implemented.

According to a fourteenth aspect, a third communication device is provided. The third communication device includes a processor and a communication interface. The processor is configured to: obtain data packet detection information, where the data packet detection information is used to detect a data flow that conforms to the data packet detection information; and
perform a third operation based on the data packet detection information, where the third operation includes:
detecting or filtering a target data flow;
reporting first information in a case that the target data flow is detected, where the first information is used to indicate that the target data flow starts; and
reporting second information in a case that the target data flow is no longer detected, where the second information is used to indicate that the target data flow ends, where
the target data flow is a data flow that conforms to the data packet detection information; and
the data packet detection information includes at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information.

According to a fifteenth aspect, a fourth communication device is provided. The fourth communication device includes a processor and a memory, the memory stores a program or instructions capable of running on the processor, and when the program or the instructions are executed by the processor, the steps of the method according to the fourth aspect are implemented.

According to a sixteenth aspect, a fourth communication device is provided. The fourth communication device includes a processor and a communication interface. The processor is configured to perform a fourth operation, where the performing a fourth operation includes at least one of the following: performing a congestion monitoring and/or congestion reporting operation on an uplink; performing the congestion monitoring and/or congestion reporting operation on a downlink; and performing the congestion monitoring and/or congestion reporting operation on the uplink and the downlink.

According to a seventeenth aspect, a communication system is provided. The communication system includes a first communication device, a second communication device, a third communication device, and a fourth communication device. The first communication device may be configured to perform the steps of the information processing method according to the first aspect, the second communication device may be configured to perform the steps of the information processing method according to the second aspect, the third communication device may be configured to perform the steps of the information processing method according to the third aspect, and the fourth communication device may be configured to perform the steps of the information processing method according to the fourth aspect.

According to an eighteenth aspect, a readable storage medium is provided. The readable storage medium stores a program or instructions, and when the program or the instructions are executed by a processor, the steps of the method according to the first aspect are implemented, or the steps of the method according to the second aspect are implemented, or the steps of the method according to the third aspect are implemented, or the steps of the method according to the fourth aspect are implemented.

According to a nineteenth aspect, a chip is provided. The chip includes a processor and a communication interface, the communication interface is coupled to the processor, and the processor is configured to run a program or instructions to implement the method according to the first aspect, or implement the method according to the second aspect, or implement the method according to the third aspect, or implement the method according to the fourth aspect.

According to a twentieth aspect, a computer program/program product is provided. The computer program/program product is stored in a storage medium, and the computer program/program product is executed by at least one processor to implement the steps of the information processing method according to the first aspect, or implement the steps of the information processing method according to the second aspect, or implement the steps of the information processing method according to the third aspect, or implement the steps of the information processing method according to the fourth aspect.

In embodiments of this application, data packet detection information including ECN information is determined, so that it can be monitored whether a target data flow starts. A corresponding congestion monitoring and/or congestion reporting requirement is set for a starting target data flow, and classification-based QoS flow mapping is implemented, so that uniform congestion monitoring is used for QoS flows, for example, only uplink congestion occurrence is monitored, only downlink congestion occurrence is monitored, or it is monitored whether congestion occurs on an uplink and a downlink, thereby better supporting, in a mobile cellular network segment, a technology corresponding to congestion marking.

### BRIEF DESCRIPTION OF DRAWINGS

Other advantages and benefits will become clear to a person of ordinary skill in the art by reading the following detailed description of the preferred implementations. The accompanying drawings are merely intended to illustrate the purpose of the preferred implementations, but are not intended to limit this application. In addition, throughout the accompanying drawings, a same reference numeral is used to represent a same component. In the accompanying drawings:
FIG. 1 is a schematic diagram of an architecture of a wireless communication system according to an embodiment of this application;
FIG. 2 is a schematic diagram of a data packet header according to an embodiment of this application;
FIG. 3 is a schematic diagram of a congestion marking scenario according to an embodiment of this application;
FIG. 4 is a schematic flowchart 1 of an information processing method according to an embodiment of this application;
FIG. 5 is a schematic flowchart 2 of an information processing method according to an embodiment of this application;
FIG. 6 is a schematic flowchart 3 of an information processing method according to an embodiment of this application;
FIG. 7 is a schematic flowchart 4 of an information processing method according to an embodiment of this application;
FIG. 8 is a schematic flowchart 1 of interaction of an information processing method according to an embodiment of this application;
FIG. 9 is a schematic flowchart 2 of interaction of an information processing method according to an embodiment of this application;
FIG. 10 is a schematic flowchart 3 of interaction of an information processing method according to an embodiment of this application;
FIG. 11 is a schematic diagram 1 of a structure of an information processing apparatus according to an embodiment of this application;
FIG. 12 is a schematic diagram 2 of a structure of an information processing apparatus according to an embodiment of this application;
FIG. 13 is a schematic diagram 3 of a structure of an information processing apparatus according to an embodiment of this application;
FIG. 14 is a schematic diagram 4 of a structure of an information processing apparatus according to an embodiment of this application;
FIG. 15 is a schematic diagram of a structure of a communication device according to an embodiment of this application; and
FIG. 16 is a schematic diagram of a structure of a network-side device according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some rather than all embodiments of this application. All other embodiments obtained by a person of ordinary skill in the art based on embodiments of this application without creative efforts shall fall within the protection scope of this application.

The term "include" in the specification and claims of this application and any variation thereof are intended to cover a non-exclusive inclusion. For example, a process, a method, a system, a product, or a device that include a series of steps or units is not limited to those steps or units that are expressly listed, but may include other steps or units that are not expressly listed or that are inherent to such a process, method, product, or device.

The terms "first", "second", and the like in the specification and claims of this application are used to distinguish between similar objects instead of describing a specified order or sequence. It should be understood that terms used in such a way are interchangeable under appropriate circumstances, so that embodiments of this application can be implemented in an order other than that illustrated or described herein. Moreover, the terms "first" and "second" typically distinguish between objects of one category rather than limiting a quantity of obj ects. For example, there may be one first object or a plurality of first objects.

In addition, in the specification and the claims, "and/or" is used to represent at least one of connected objects. For example, A and/or B represents the following three cases: Only A exists, only B exists, and both A and B exist. The character "/" generally represents an "or" relationship between associated objects.

In embodiments of this application, words such as "example" or "for example" are used to indicate an example, illustration, or description. Any embodiment or design solution described as "example" or "for example" in embodiments of this application should not be construed as being more preferred or advantageous than other embodiments or design solutions. Exactly, the words such as "example" or "for example" are used to present related concepts in a specific manner.

Technologies described herein are not limited to a 5th generation (5th-generation, 5G) system and a subsequent evolved communication system and are not limited to an LTE/LTE-advanced (LTE-Advanced, LTE-A) system, and may also be used in various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system.

The terms "system" and "network" are usually used interchangeably. The CDMA system can implement radio technologies such as CDMA2000 and universal terrestrial radio access (Universal Terrestrial Radio Access, UTRA). UTRA includes wideband CDMA (Wideband Code Division Multiple Access, WCDMA) and another CDMA variant. The TDMA system can implement radio technologies such as a global system for mobile communications (Global System for Mobile Communication, GSM). The OFDMA system can implement radio technologies such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, and Flash-OFDM. UTRA and E-UTRA are parts of a universal mobile telecommunications system (Universal Mobile Telecommunications System, UMTS). LTE and more advanced LTE (for example, LTE-A) are new UMTS versions using E-UTRA. UTRA, E-UTRA, UMTS, LTE, LTE-A, and GSM are described in documents from an organization called "3rd generation partnership project" (3rd Generation Partnership Project, 3GPP). CDMA2000 and UMB are described in documents from an organization called "3rd generation partnership project 2" (3GPP2). The technologies described in this specification may be used for the systems and radio technologies mentioned above, as well as other systems and radio technologies. The following describes a new radio (New Radio, NR) system for illustrative purposes, and NR terms are used in most of the following descriptions. However, these technologies are also applicable to applications such as a 6th generation (6^{th} Generation, 6G) communication system other than NR system applications.

To facilitate better understanding of embodiments of this application, the following technical points are first described below.

ECN is a technology in which a congestion notification is displayed by performing congestion marking on a data packet. When congestion occurs, a value of an ECN bit in the data packet is enabled to be 11, representing congestion experienced (Congestion Experienced, CE).

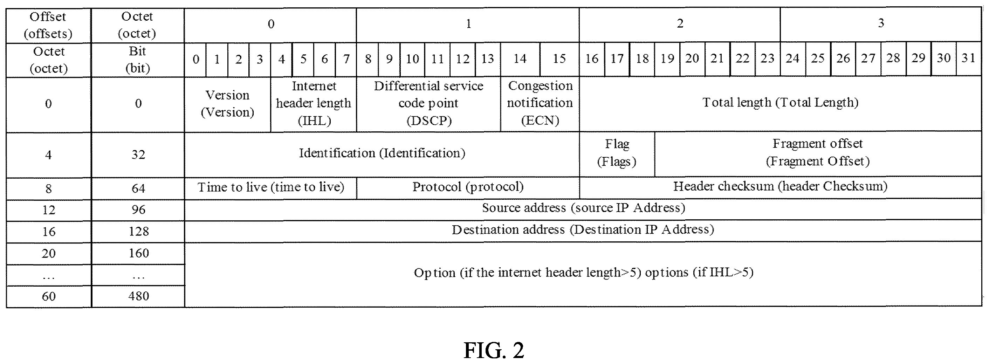

As shown in FIG. 2, ECN uses 2 least significant bits of a TOS in an IPv4 or IPv6 header, and code corresponds to four code points: 00 representing that ECN is not supported, 01 (ECT(0)), 10 (ECT(1)) representing that ECN is supported and requested, and 11 (CE) representing congestion experienced. After ECN evolves into an ECN operation for L4S, the meaning of ECT(1) is changed, and ECT(1) represents that L4S is supported and requested. Compared with the conventional ECN congestion marking technology, the ECN operation for L4S may mean that congestion CE reporting needs to be performed when lighter congestion occurs. In other words, a congestion level represented by CE corresponding to ECN is greater than a congestion level identified by CE corresponding to L4S, in other words, congestion is more serious.

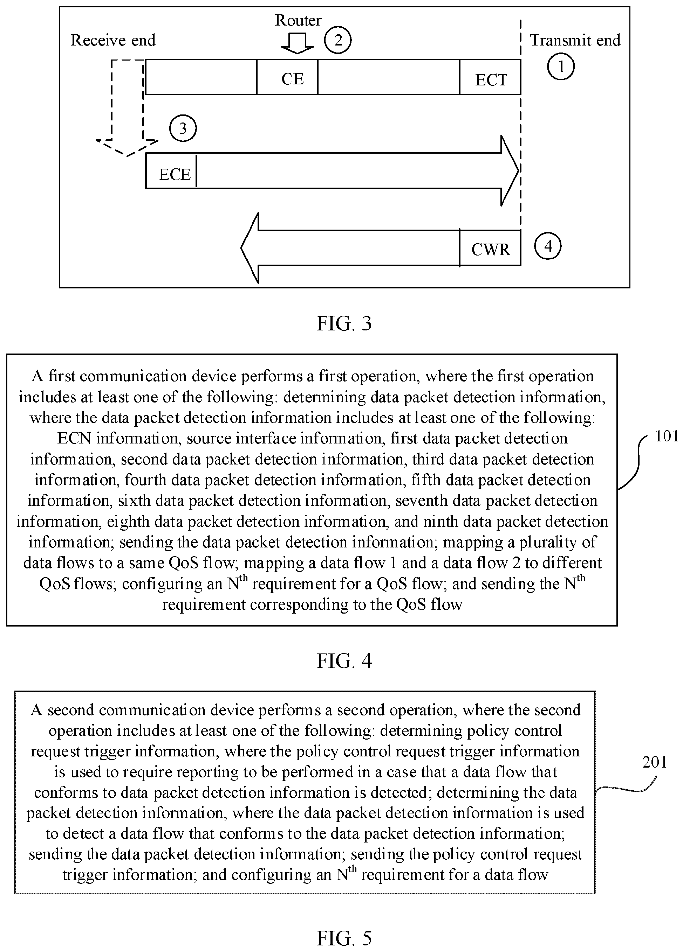

As shown in FIG. 3, in the technology of conventional ECN or the ECN operation for L4S, when congestion occurs on an uplink, a router modifies a value of an ECN bit of an uplink data packet to CE. A receive end of uplink data reflects a congestion notification to a transmit end by using an ECN echo (ECE), and the transmit end adjusts encoding efficiency or a throughput. The same applies to a downlink.

In a case that the receive end reflects the congestion notification, the receive end does not differentiate between L4S CE and ECN CE, and merely reflects the congestion notification. Therefore, a node that supports ECN and does not support L4S can also reflect an L4S-based congestion notification.

In a 5GS, a RAN is where congestion is the most likely to occur, but the RAN does not support data flow detection. A minimum management unit visible to the RAN is a QoS flow. At present, a CN does not support ECN marking-based flow detection, either. Therefore, to better reduce congestion by using the congestion marking technology, the following problem needs to be resolved: how to support, in a mobile cellular network segment, a technology corresponding to congestion marking.

Problem 1: Conditions under which uplink L4S congestion marking, downlink L4S congestion marking, downlink ECN congestion marking, and uplink ECN congestion marking can be enabled are still unclear.

A solution is as follows:
If ECT(1) is received on the uplink, and a value of a downlink ECN mark bit is not no ECN, it is considered that L4S can be applied to the uplink.

If ECT(1) is received on the downlink, and a value of an uplink ECN mark bit is not no ECN, it is considered that L4S can be applied to the downlink.

If ECT(0) is received on the uplink, and the value of the downlink ECN mark bit is not no ECN, it is considered that ECN can be applied to the uplink.

If ECT(0) is received on the downlink, and the value of the uplink ECN mark bit is not no ECN, it is considered that ECN can be applied to the downlink.

Problem 2: To implement congestion marking, a PCF or an SMF needs to map an L4S flow to a QoS flow. Before this, a UPF needs to first detect a data flow that supports and/or requires the ECN operation for L4S. However, a packet filter (packet filter) does not support use of ECN as the packet filter.

Problem 3: It is unclear how to perform mapping to a QoS flow.

A solution is as follows:
A plurality of data flows to which uplink L4S can be applied but downlink L4S cannot be applied are mapped to a same QoS flow.

A plurality of data flows to which downlink L4S can be applied but uplink L4S cannot be applied are mapped to a same QoS flow.

A plurality of data flows to which both uplink L4S and downlink L4S can be applied are mapped to a same QoS flow.

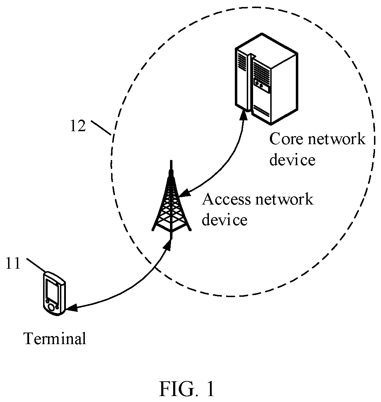

Referring to FIG. 1, FIG. 1 is a schematic diagram of an architecture of a wireless communication system according to an embodiment of this application.

FIG. 1 is a block diagram of a wireless communication system to which an embodiment of this application is applicable. The wireless communication system includes a terminal 11 and a network-side device 12. The terminal 11 may be a mobile phone, a tablet personal computer (Tablet Personal Computer), a laptop computer (Laptop Computer) also referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (a home device with a wireless communication function, such as a refrigerator, a television, a laundry machine, or a furniture), a gaming console, a personal computer (personal computer, PC), a teller machine, a self-service machine, or another terminal-side device. The wearable device includes a smart watch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. It should be noted that a specific type of the terminal 11 is not limited in embodiments of this application. The network-side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a WiFi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the field. Provided that a same technical effect is achieved, the base station is not limited to a specific technical vocabulary. It should be noted that in embodiments of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in embodiments of this application, only a core network device in the NR system is used as an example for description, and a specific type of the core network device is not limited.

Optionally, obtaining may be understood as obtaining from a configuration, receiving, receiving after a request, obtaining through self-learning, obtaining through derivation based on information that is not received, or obtaining through processing based on received information. This may be specifically determined based on an actual requirement, and is not limited in embodiments of this application. For example, when a piece of capability indication information sent by a device is not received, it may be derived that the device does not support the capability.

Optionally, sending may include broadcasting, broadcasting in a system message, and returning after a response is made to a request.

In an optional embodiment of this application, a communication device may include at least one of the following: a communication network element and a terminal.

In an embodiment of this application, the communication network element may include at least one of the following: a core network network element and a radio access network network element.

In this embodiment of this application, the core network network element (CN network element) may include but is not limited to at least one of the following: a core network device, a core network node, a core network function, a core network network element, a mobility management entity (Mobility Management Entity, MME), an access and mobility management function (Access Management Function, AMF), a session management function (Session Management Function, SMF), a user plane function (User Plane Function, UPF), a serving gateway (serving GW, SGW), a PDN gateway (PDN GateWay, PDN gateway), a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), and an application function (Application Function).

In this embodiment of this application, the RAN network element may include but is not limited to at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved NodeB (evolved NodeB, eNB), a 5G base station (gNB), a radio network controller (Radio Network Controller, RNC), a NodeB (NodeB), a non-3GPP interworking function (Non-3GPP InterWorking Function, N3IWF), an access controller (Access Controller, AC) node, an access point (Access Point, AP) device, a wireless local area network (Wireless Local Area Networks, WLAN) node, or the N3IWF.

The base station may be a base station (BTS, Base Transceiver Station) in GSM or CDMA, or may be a base station (NodeB) in WCDMA, or may be an evolved NodeB (eNB or e-NodeB, evolutional NodeB) in LTE or a 5G base station (gNB). This is not limited in embodiments of this application.

In an optional embodiment of this application, the terminal may include a relay that supports a terminal function and/or a terminal that supports a relay function. The terminal may also be referred to as a terminal device or user equipment (User Equipment, UE). The terminal may be a terminal-side device such as a mobile phone, a tablet personal computer (Tablet Personal Computer), a laptop computer (Laptop Computer), a personal digital assistant (Personal Digital Assistant, PDA), a mobile internet device (Mobile Internet Device, MID), a wearable device (Wearable Device), or an in-vehicle device. It should be noted that a specific type of the terminal is not limited in embodiments of this application.

In an embodiment of this application, reporting represents one of the following: notification and sending.

In an embodiment of this application, monitoring (monitor) requires at least one of the following to be included: supervision, detection, measurement, and reporting.

In an embodiment of this application, monitoring may also be referred to as at least one of the following: supervision, detection, and measurement.

ECN is a technology in which a congestion notification is displayed by performing congestion marking on a data packet. When congestion occurs, a value of an ECN bit in the data packet is enabled to be 11, representing congestion experienced CE.

ECN for L4S means that congestion CE reporting needs to be performed when lighter congestion occurs.

Explicit congestion notification (ECN) is an extension of the TCP/IP protocol, and is defined in RFC 3168 (2001). ECN supports end-to-end network congestion notification. Details are shown in FIG. 3.

The full form of L4S is low latency, low loss, scalable throughput (low latency, low loss, scalable throughput, L4S).

In an embodiment of this application, the start of congestion, ongoing congestion, and congestion occurrence mean the same.

In an embodiment of this application, the end of congestion, no congestion, and no congestion occurrence mean the same.

In an embodiment of this application, congestion may mean a case that network transmission performance is degraded due to limited resources of a transmission node when there are too many packets to be transmitted in a packet switched network. When congestion occurs on a network, a data loss, a delay increase, and a throughput decrease usually occur. Seriously, congestion collapse (congestion collapse) even occurs.

In an embodiment of this application, congestion status information may be information indicating a congestion status such as the start of congestion, the end of congestion, a congestion level, and a congestion direction.

In an optional embodiment of this application, congestion monitoring may include at least one of the following: congestion status monitoring, congestion status measurement, and/or congestion status reporting. The congestion status includes at least one of the following: the start of congestion or congestion occurrence, the end of congestion or no congestion, congestion degradation, and congestion escalation.

In an optional embodiment of this application, that congestion occurs on a first object means that congestion occurs on data transmission in the first object.

In an optional embodiment of this application, congestion status information of the first object is congestion status information of data transmission in the first object.

In an optional embodiment of this application, that congestion occurs on the first object includes one of the following: QoS of the first object cannot be met, a data sending rate of the first object is less than a data receiving rate of the first object, time-frequency resources are insufficient, an overflow occurs on a buffer, and an overflow occurs on a queue.

In an implementation, for example, that the time-frequency resources are insufficient means that time-frequency resources of a first cell are insufficient to transmit all received data or buffered data.

In an implementation, the first object may be a first data radio bearer (Data Radio Bearer, DRB), and that congestion occurs on the first DRB includes one of the following: QoS of the first DRB cannot be met, and a data sending rate of the first DRB is less than a data receiving rate of the first object. For example, that the QoS cannot be met means that a rate cannot be ensured, a packet loss rate cannot be ensured, a packet loss ratio cannot be ensured, and a PER cannot be ensured.

In an implementation, that the data sending rate of the first object is less than the data receiving rate of the first object includes: a sending rate of data of the first object sent to a first interface is less than a sending rate of data of the first object received from a second interface. The first interface or the second interface includes one of the following: a Uu interface, an N9 or N3 interface, and an N6 interface.

When the first interface is a Uu interface, the second interface may be an N3 interface.

When the first interface is an N3 interface, the second interface may be a Uu interface.

When the first interface is an N6 interface, the second interface may be an N3 or N9 interface.

When the first interface is an N3 or N9 interface, the second interface may be an N6 interface.

In an optional embodiment of this application, the QoS includes at least one of the following: a guaranteed bit rate (for example, a guaranteed flow bit rate (Guaranteed Flow Bit Rate, GFBR)), a minimum transmission rate (for example, a minimum flow bit rate), a packet error rate (Packet Error Rate, PER), a packet loss rate, a transmission delay budget, and a buffer delay budget.

That the QoS cannot be met includes at least one of the following: the guaranteed flow bit rate cannot be ensured (for example, an actual transmission rate is less than the guaranteed flow bit rate), the minimum transmission rate cannot be met (for example, an actual minimum transmission rate is less than the minimum transmission rate), the packet error rate cannot be met (for example, an actual packet error rate is greater than the packet error rate in the QoS), the packet loss rate cannot be met (for example, an actual packet loss rate is greater than the packet loss rate in the QoS), the transmission delay budget cannot be met (an actual transmission delay overhead is greater than the transmission delay budget), and the buffer delay budget cannot be met (an actual data buffer delay overhead is greater than the buffer delay budget).

In an optional embodiment of this application, the data packet includes a protocol data unit (Protocol Data Unit, PDU) packet data unit.

In an optional embodiment of this application, a QoS flow having a corresponding congestion monitoring requirement means that a congestion monitoring requirement corresponding to the QoS flow is obtained through reception. If no congestion monitoring requirement corresponding to the QoS flow is obtained, it may be considered that the QoS flow does not have a corresponding congestion monitoring requirement. The same applies to a data flow having a corresponding congestion monitoring requirement.

In an optional embodiment of this application, the data flow is short for a service data flow.

In an optional embodiment of this application, a tunnel includes at least one of the following: a session (for example, a PDU session or a session between the RAN and the CN), a tunnel between the RAN and the CN, a QoS flow, a QoS subflow, an evolved packet system (Evolved Packet System, EPS) bearer, a PDP context, a DRB, a signaling radio bearer (Signalling Radio Bearer, SRB), a logical channel, an IPsec association, and a GPRS tunneling protocol (GPRS Tunnelling Protocol, GTP) tunnel (tunnel). The tunnel may be instantiated as any one of the foregoing types of tunnels.

In an embodiment of this application, an NG interface may also be referred to as an S1 interface or an N2 interface, and a name thereof is not limited.

In an embodiment of this application, a wireless communication network may be at least one of the following: a public network or a non-public network; or a first network may be a non-public network.

In an embodiment of this application, the non-public network is short for a non-public network. The non-public network may be referred to as one of the following: a non-public communication network. The non-public network may be deployed in at least one of the following manners: a physical non-public network, a virtual non-public network, and a non-public network implemented on the public network. In an implementation, the non-public network is a closed access group (Closed Access Group, CAG). One CAG may include a group of terminals.

In an embodiment of this application, the non-public network may include or be referred to as a private network. The private network may be referred to as one of the following: a private communication network, a private network, a local area network (LAN), a private virtual network (PVN), an isolated communication network, a dedicated communication network, or another name. It should be noted that a naming manner is not specifically limited in embodiments of this application.

In an embodiment of this application, the public network is short for a public network. The public network may be referred to as one of the following: a public communication network or another name. It should be noted that a naming manner is not specifically limited in embodiments of this application.

In an embodiment of this application, a data packet size may be referred to as a data packet length.

In an embodiment of this application, the data packet may be referred to as a data frame.

In an optional embodiment of this application, a communication device may include at least one of the following: a communication network element and a terminal.

In an embodiment of this application, the communication network element may include at least one of the following: a core network network element and a radio access network network element.

In this embodiment of this application, the core network network element (CN network element) may include but is not limited to at least one of the following: a core network device, a core network node, a core network function, a core network network element, a mobility management entity (Mobility Management Entity, MME), an access and mobility management function (Access Management Function, AMF), a session management function (Session Management Function, SMF), a user plane function (User Plane Function, UPF), a serving gateway (serving GW, SGW), a PDN gateway (PDN GateWay, PDN gateway), a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), and an application function (Application Function).

In this embodiment of this application, the RAN network element may include but is not limited to at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved NodeB (evolved NodeB, eNB), a 5G base station (gNB), a radio network controller (Radio Network Controller, RNC), a NodeB (NodeB), a non-3GPP interworking function (Non-3GPP InterWorking Function, N3IWF), an access controller (Access Controller, AC) node, an access point (Access Point, AP) device, a wireless local area network (Wireless Local Area Networks, WLAN) node, or the N3IWF.

The base station may be a base station (BTS, Base Transceiver Station) in GSM or CDMA, or may be a base station (NodeB) in WCDMA, or may be an evolved NodeB (eNB or e-NodeB, evolutional NodeB) in LTE or a 5G base station (gNB). This is not limited in embodiments of this application.

In an optional embodiment of this application, the terminal may include a relay that supports a terminal function and/or a terminal that supports a relay function. The terminal may also be referred to as a terminal device or user equipment (User Equipment, UE). The terminal may be a terminal-side device such as a mobile phone, a tablet personal computer (Tablet Personal Computer), a laptop computer (Laptop Computer), a personal digital assistant (Personal Digital Assistant, PDA), a mobile internet device (Mobile Internet Device, MID), a wearable device (Wearable Device), or an in-vehicle device. It should be noted that a specific type of the terminal is not limited in embodiments of this application.

The following describes an information processing method in embodiments of this application.

Referring to FIG. 4, an embodiment of this application provides an information processing method, applied to a first communication device. The first communication device includes but is not limited to a CN network element (for example, an SMF or a PCF). In this case, the CN network element may be referred to as a first CN network element, and the method includes the following step:

Step 101: The first communication device performs a first operation, where the first operation includes at least one of the following:
determining data packet detection information, where the data packet detection information includes at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information;
sending the data packet detection information;
mapping a plurality of data flows to a same QoS flow;
mapping a data flow 1 and a data flow 2 to different QoS flows;
configuring an N^{th} requirement for a QoS flow; and
sending the N^{th} requirement corresponding to the QoS flow, where
a value of N is one of the following: 1, 2, 3, 4, 5, 6, and 7;
the first requirement is used to require one of the following: performing an ECN operation for L4S on an uplink, and performing a congestion monitoring and/or congestion reporting operation on the uplink;
the second requirement is used to require one of the following: performing the ECN operation for L4S on a downlink, and performing the congestion monitoring and/or congestion reporting operation on the downlink;
the third requirement is used to require one of the following: performing the ECN operation for L4S on the uplink and/or the downlink, and performing the congestion monitoring and/or congestion reporting operation on the uplink and/or the downlink;
the fourth requirement is used to require one of the following: performing a first ECN operation on the uplink, and performing the congestion monitoring and/or congestion reporting operation on the uplink;
the fifth requirement is used to require one of the following: performing the first ECN operation on the downlink, and performing the congestion monitoring and/or congestion reporting operation on the downlink;
the sixth requirement is used to require one of the following: performing the first ECN operation on the uplink and/or the downlink, and performing the congestion monitoring and/or congestion reporting operation on the uplink and/or the downlink; and
the seventh requirement is used to require at least one of the following: performing the first ECN operation and/or the ECN operation for L4S on the uplink and/or the downlink, and performing the congestion monitoring and/or congestion reporting operation on the uplink and/or the downlink.

Optionally, the data packet detection information is sent to a first destination end, and the first destination end includes at least one of the following: a UPF and a third communication device.

The N^{th} requirement corresponding to the QoS flow is sent to a second destination end, and the second destination end includes at least one of the following: the UPF, the third communication device, a fourth communication device, and a RAN.

In an implementation, the data packet detection information is used to detect a data flow that conforms to the data packet detection information.

In an implementation, the N^{th} requirement may be indicated by using explicit indication information. For example, an N^{th} indication may be used to indicate the N^{th} requirement. In an implementation, the third requirement may be represented by using a first indication and a second indication.

In an implementation, the sixth requirement may be represented by using a fourth indication and a fifth indication.

Optionally, the ECN information includes at least one of the following: first ECN information, second ECN information, and third ECN information;
the first ECN information is information used to indicate a first value;
the second ECN information is information used to indicate a second value; and
the third ECN information is information used to indicate a third value.

In an implementation, the first ECN information, the second ECN information, or the third ECN information may be represented as different values of a ToS Traffic Class field.

In an implementation, the first value, the second value, or the second value may be represented as different values of the ToS Traffic Class field.

Optionally, the mapping a plurality of data flows to a same QoS flow includes:
mapping the plurality of data flows to the same QoS flow in a case that a seventh condition is met, where the seventh condition includes one of the following:
each of the plurality of data flows is a first data flow;
each of the plurality of data flows is a second data flow;
each of the plurality of data flows is a third data flow;
a data flow in the plurality of data flows is one of the following: the first data flow, the second data flow, and the third data flow;
each of the plurality of data flows is a fourth data flow;
each of the plurality of data flows is a fifth data flow;
each of the plurality of data flows is a sixth data flow;
each of the plurality of data flows is a seventh data flow;
a data flow in the plurality of data flows is one of the following: the fourth data flow, the fifth data flow, and the sixth data flow; and
a data flow in the plurality of data flows is one of the following: the first data flow, the second data flow, the third data flow, the fourth data flow, the fifth data flow, and the sixth data flow.

It is easy to understand the following descriptions.

In a manner,
(1) data flows of which only the uplink requires the first ECN operation are separately mapped to a same QoS flow;
(2) data flows of which only the downlink requires the first ECN operation are separately mapped to a same QoS flow;
(3) data flows of which both the uplink and the downlink require the first ECN operation are separately mapped to a same QoS flow;
(4) data flows of which only the uplink requires the ECN operation for L4S are separately mapped to a same QoS flow;
(5) data flows of which only the downlink requires the ECN operation for L4S are separately mapped to a same QoS flow; and
(6) data flows of which both the uplink and the downlink require the ECN operation for L4S are separately mapped to a same QoS flow.

In another manner,
(1) data flows of which the uplink and/or downlink requires the first ECN operation are separately mapped to a same QoS flow, where
   the same applies to mapping of a data flow that requires the first ECN operation to a QoS flow, and three types of data flows may also be separately mapped to a same QoS flow: (a) a data flow of which only the uplink requires the first ECN operation; (b) a data flow of which only the downlink requires the first ECN operation; and (c) a data flow of which both the uplink and the downlink require the first ECN operation; and
(2) data flows of which the uplink and/or downlink requires the ECN operation for L4S are separately mapped to a same QoS flow.

To be specific, the QoS flow may include three types of data flows: (a) a data flow of which only the uplink requires the ECN operation for L4S; (b) a data flow of which only the downlink requires the ECN operation for L4S; and (c) a data flow of which both the uplink and the downlink require the ECN operation for L4S.

In another manner, data flows of which the uplink and/or downlink requires the first ECN operation or the ECN operation for L4S are separately mapped to a same QoS flow.

To be specific, the QoS flow may include six types of data flows: data flows of which the uplink and/or downlink requires the ECN operation for L4S, and data flows of which the uplink and/or downlink requires the first ECN operation.

Optionally, the mapping a data flow 1 and a data flow 2 to different QoS flows includes:
mapping the data flow 1 and the data flow 2 to the different QoS flows in a case that an eighth condition is met, where the eighth condition includes one of the following:
the data flow 1 is an N^{th} data flow, and the data flow 2 is not the N^{th} data flow;
the data flow 1 is an N1^{th} data flow, the data flow 2 is an N2^{th} data flow, and N1 and N2 are different; and
the data flow 1 is a data flow of which the uplink and/or downlink requires the ECN operation for L4S, and the data flow 2 is a data flow of which the uplink and/or downlink requires the first ECN operation, where
a value of N, N1, or N2 is one of the following: 1, 2, 3, 4, 5, 6, and 7.

Optionally, the first data flow is a data flow that meets at least one of the following:
a data flow of which the uplink supports the ECN operation for L4S and/or requires the ECN operation for L4S, a data flow for which a value of ECN information of uplink data is a first value, or a data flow that conforms to the first data packet detection information;
a data flow of which the downlink does not support the ECN operation for L4S and/or does not require the ECN operation for L4S, a data flow for which a value of ECN information of downlink data does not include the first value, or a data flow that does not conform to the second data packet detection information;
a data flow for which a first QoS identifier is configured; and
a data flow for which the first requirement is configured;
   and/or
the second data flow is a data flow that meets at least one of the following:
   a data flow of which the uplink does not support the ECN operation for L4S and/or does not require the ECN operation for L4S, a data flow for which a value of ECN information of uplink data does not include the first value, or a data flow that does not conform to the first data packet detection information;
   a data flow of which the downlink supports the ECN operation for L4S and/or requires the ECN operation for L4S, a data flow for which a value of ECN information of downlink data includes the first value, or a data flow that conforms to the second data packet detection information;
   a data flow for which a second QoS identifier is configured; and
   a data flow for which the second requirement is configured;
      and/or
   the third data flow is a data flow that meets at least one of the following:
      a data flow of which the uplink and/or downlink supports the ECN operation for L4S and/or requires the ECN operation for L4S;
      a data flow for which a value of ECN information of uplink data and/or a value of ECN information of downlink data are or is the first value;
      a data flow that conforms to the first data packet detection information and/or the second data packet detection information;
      a data flow that conforms to the seventh data packet detection information;
      a data flow for which a third QoS identifier is configured; and
      a data flow for which the third requirement is configured;
         and/or
      the fourth data flow is a data flow that meets at least one of the following:
         a data flow of which the uplink supports the first ECN operation and/or requires the first ECN operation, a data flow for which a value of ECN information of uplink data is a second value, or a data flow that conforms to the third data packet detection information;
         a data flow of which the downlink does not support the first ECN operation and/or does not require the first ECN operation, a data flow for which a value of ECN information of downlink data does not include the second value, or a data flow that does not conform to the fourth data packet detection information;
         a data flow for which a fourth QoS identifier is configured; and
         a data flow for which the fourth requirement is configured;
            and/or
         the fifth data flow is a data flow that meets at least one of the following:
            a data flow of which the uplink does not support the first ECN operation and/or does not require the first ECN operation, a data flow for which a value of ECN information of uplink data does not include the second value, or a data flow that does not conform to the third data packet detection information;
            a data flow of which the downlink supports the first ECN operation and/or requires the first ECN operation, a data flow for which a value of ECN information of downlink data is the second value, or a data flow that conforms to the fourth data packet detection information;
            a data flow for which a fifth QoS identifier is configured; and
            a data flow for which the fifth requirement is configured;
               and/or
            the sixth data flow is a data flow that meets at least one of the following:
               a data flow of which the uplink and/or downlink supports the first ECN operation and/or requires the first ECN operation;
               a data flow for which a value of ECN information of uplink data and/or a value of ECN information of downlink data are or is the second value;
               a data flow that conforms to the third data packet detection information and/or the fourth data packet detection information;
               a data flow that conforms to the eighth data packet detection information;
               a data flow for which a sixth QoS identifier is configured; and
               a data flow for which the sixth requirement is configured;
                  and/or
               the seventh data flow is a data flow that meets at least one of the following:
                  a data flow of which the uplink supports the first ECN operation or the ECN operation for L4S and/or requires the first ECN operation or the ECN operation for L4S;
                  a data flow of which the downlink supports the first ECN operation or the ECN operation for L4S and/or requires the first ECN operation or the ECN operation for L4S;
                  a data flow for which a value of ECN information of uplink data is the first value or the second value;
                  a data flow for which a value of ECN information of downlink data is the first value or the second value;
                  a data flow that conforms to at least one of the following: the first data packet detection information, the second data packet detection information, the third data packet detection information, the fourth data packet detection information, the fifth data packet detection information, the sixth data packet detection information, the seventh data packet detection information, the eighth data packet detection information, and the ninth data packet detection information;
                  a data flow for which a seventh QoS identifier is configured; and
                  a data flow for which the seventh requirement is configured.

Optionally, the plurality of data flows are two and/or more than two data flows.

Optionally, the first data flow further meets at least one of the following:
a data flow of which the downlink supports the first ECN operation and/or requires the first ECN operation;
a data flow for which a value of ECN information of downlink data is the second value or a data flow that conforms to the fourth data packet detection information; and
a data flow for which a value of ECN information of downlink data is a third value or a data flow that conforms to the sixth data packet detection information;
   and/or
the second data flow further meets at least one of the following:
   a data flow of which the uplink supports the first ECN operation and/or requires the first ECN operation;
   a data flow for which a value of ECN information of uplink data is the second value or a data flow that conforms to the third data packet detection information; and
   a data flow for which a value of ECN information of uplink data is the third value or a data flow that conforms to the fifth data packet detection information;
      and/or
   the fourth data flow further meets at least one of the following:
      a data flow of which the downlink supports the ECN operation for L4S and/or requires the ECN operation for L4S;
      a data flow for which a value of ECN information of downlink data is the first value or a data flow that conforms to the second data packet detection information; and
      a data flow for which a value of ECN information of downlink data is the third value or a data flow that conforms to the sixth data packet detection information;
         and/or
      the fifth data flow further meets at least one of the following:
         a data flow of which the uplink supports the ECN operation for L4S and/or requires the ECN operation for L4S;
         a data flow for which a value of ECN information of uplink data is the first value or a data flow that conforms to the first data packet detection information; and
         a data flow for which a value of ECN information of uplink data is the third value or a data flow that conforms to the fifth data packet detection information.

Optionally, the configuring an N^{th} requirement for a QoS flow includes at least one of the following:
configuring the N^{th} requirement for the QoS flow in a case that a ninth condition is met, where
the ninth condition includes at least one of the following:
   a data flow mapped to the QoS flow is an N^{th} data flow;
   a QoS identifier of the data flow mapped to the QoS flow is an N^{th} QoS identifier; and
   the data flow mapped to the target QoS flow has the N^{th} requirement; and
   obtaining information used to indicate that the N^{th} data flow starts, where
   the value of N is one of the following: 1, 2, 3, 4, 5, 6, and 7.

Optionally, after the mapping a plurality of data flows to a same QoS flow, the method further includes:
sending, by the first communication device, the N^{th} requirement corresponding to the QoS flow, where
the value of N is one of the following: 1, 2, 3, 4, 5, 6, and 7.

Optionally, the sending, by the first communication device, the N^{th} requirement corresponding to the QoS flow includes: sending, by the first communication device, the N^{th} requirement corresponding to the QoS flow to a third destination end.

The third destination end includes one of the following: the fourth communication device, the RAN, and the UPF.

Optionally, that the first communication device performs a first operation includes:
obtaining, by the first communication device, policy control request trigger information and/or the data packet detection information, where the policy control request trigger information is used to require reporting to be performed in a case that a data flow that conforms to the data packet detection information is detected, and the data packet detection information is used to detect a data flow that conforms to the data packet detection information; and
performing, by the first communication device, the first operation based on the policy control request trigger information and/or the data packet detection information.

Optionally, the method further includes:
obtaining, by the first communication device, first information, where the first information is used to indicate that transmission of a data flow that conforms to the data packet detection information starts; and
performing the first operation based on the first information.

Optionally, the first communication device obtains the first information from a third source end, and the third source end includes at least one of the following: the third communication device and the UPF.

In an implementation, the method further includes:
obtaining, by the first communication device, second information, where the second information is used to indicate that transmission of a data flow that conforms to the data packet detection information ends.

Optionally, the first communication device obtains the second information from a fourth source end, and the fourth source end includes at least one of the following: the third communication device and the UPF.

In an implementation, the policy control request trigger information includes at least one of the following:
a first policy control request trigger, where data packet detection information corresponding to the first policy control request trigger includes the first data packet detection information;
a second policy control request trigger, where data packet detection information corresponding to the second policy control request trigger includes the second data packet detection information;
a third policy control request trigger, where data packet detection information corresponding to the third policy control request trigger includes the third data packet detection information;
a fourth policy control request trigger, where data packet detection information corresponding to the fourth policy control request trigger includes the fourth data packet detection information;
a fifth policy control request trigger, where data packet detection information corresponding to the fifth policy control request trigger includes the fifth data packet detection information;
a sixth policy control request trigger, where data packet detection information corresponding to the sixth policy control request trigger includes the sixth data packet detection information;
a seventh policy control request trigger, where data packet detection information corresponding to the seventh policy control request trigger includes the seventh data packet detection information;
an eighth policy control request trigger, where data packet detection information corresponding to the eighth policy control request trigger includes the eighth data packet detection information; and
a ninth policy control request trigger, where data packet detection information corresponding to the ninth policy control request trigger includes the ninth data packet detection information.

Optionally, a representation form of the N^{th} requirement includes one of the following: explicit N^{th} indication information and the N^{th} QoS identifier;
and/or
the third requirement may be represented by using explicit first indication information or second indication information;
   and/or
the sixth requirement may be represented by using explicit fourth indication information or fifth indication information,
where
the value of N is one of the following: 1, 2, 3, 4, 5, 6, and 7;
the N^{th} indication information is used to indicate the N^{th} requirement; and
the N^{th} QoS identifier is used to indicate the N^{th} requirement.

Optionally, the first data packet detection information is used to detect a data flow whose uplink data carries a first value;
and/or
the second data packet detection information is used to detect a data flow whose downlink data carries the first value;
   and/or
the third data packet detection information is used to detect a data flow whose uplink data carries a second value;
   and/or
the fourth data packet detection information is used to detect a data flow whose downlink data carries the second value;
   and/or
the fifth data packet detection information is used to detect a data flow whose uplink data carries a third value;
   and/or
the sixth data packet detection information is used to detect a data flow whose downlink data carries the third value;
   and/or
the seventh data packet detection information is used to detect a data flow whose uplink data and/or downlink data carry or carries the first value;
   and/or
the eighth data packet detection information is used to detect a data flow whose uplink data and/or downlink data carry or carries the second value;
   and/or
the ninth data packet detection information is used to detect a data flow whose uplink data and/or downlink data carry or carries the first value or the second value.

Optionally, the first data packet detection information includes one of the following: the first value, and the first value and first source interface information;
the second data packet detection information includes one of the following: the first value, and the first value and second source interface information;
the third data packet detection information includes one of the following: the second value, and the second value and the first source interface information;
the fourth data packet detection information includes one of the following: the second value, and the second value and the second source interface information;
the fifth data packet detection information includes one of the following: the third value, and the third value and the first source interface information;
the sixth data packet detection information includes one of the following: the third value, and the third value and the second source interface information;
the seventh data packet detection information includes the first value;
the seventh data packet detection information includes the second value; and
the eighth data packet detection information includes at least one of the following: the first value and the second value,
where
the first source interface information is capable of being used to indicate that a data direction is the uplink; and
the second source interface information is capable of being used to indicate that the data direction is the downlink.

In this embodiment of this application, data packet detection information including ECN information is determined, so that it can be monitored whether a target data flow starts. A corresponding congestion monitoring and/or congestion reporting requirement is set for a starting target data flow, and classification-based QoS flow mapping is implemented, so that uniform congestion monitoring is used for QoS flows, for example, only uplink congestion occurrence is monitored, only downlink congestion occurrence is monitored, or it is monitored whether congestion occurs on an uplink and a downlink, thereby better supporting, in a mobile cellular network segment, a technology corresponding to congestion marking.

Referring to FIG. 5, an embodiment of this application provides an information processing method, applied to a second communication device. The second communication device includes but is not limited to a CN network element (for example, a PCF). In this case, the CN network element may be referred to as a second CN network element, and the method includes the following step:

Step 201: The second communication device performs a second operation, where the second operation includes at least one of the following:
determining policy control request trigger information, where the policy control request trigger information is used to require reporting to be performed in a case that a data flow that conforms to data packet detection information is detected;
determining the data packet detection information, where the data packet detection information is used to detect a data flow that conforms to the data packet detection information;
sending the data packet detection information;
sending the policy control request trigger information; and
configuring an N^{th} requirement for a data flow, where
the data packet detection information includes at least one of the following: ECN information, first data packet detection information, second data packet detection information, third data packet detection information, fourth data packet detection information, fifth data packet detection information, sixth data packet detection information, seventh data packet detection information, eighth data packet detection information, and ninth data packet detection information;
a value of N is one of the following: 1, 2, 3, 4, 5, 6, and 7;
the first requirement is used to require one of the following: performing an ECN operation for L4S on an uplink, and performing a congestion monitoring and/or congestion reporting operation on the uplink;
the second requirement is used to require one of the following: performing the ECN operation for L4S on a downlink, and performing the congestion monitoring and/or congestion reporting operation on the downlink;
the third requirement is used to require one of the following: performing the ECN operation for L4S on the uplink and/or the downlink, and performing the congestion monitoring and/or congestion reporting operation on the uplink and/or the downlink;
the fourth requirement is used to require one of the following: performing a first ECN operation on the uplink, and performing the congestion monitoring and/or congestion reporting operation on the uplink;
the fifth requirement is used to require one of the following: performing the first ECN operation on the downlink, and performing the congestion monitoring and/or congestion reporting operation on the downlink;
the sixth requirement is used to require one of the following: performing the first ECN operation on the uplink and/or the downlink, and performing the congestion monitoring and/or congestion reporting operation on the uplink and/or the downlink; and
the seventh requirement is used to require at least one of the following: performing the first ECN operation and/or the ECN operation for L4S on the uplink and/or the downlink, and performing the congestion monitoring and/or congestion reporting operation on the uplink and/or the downlink.

Optionally, the policy control request trigger information and/or the data packet detection information are or is sent to a fourth destination end, and the fourth destination end includes at least one of the following: an SMF and a first communication device.

In an implementation, the policy control request trigger information includes the data packet detection information. It is easy to understand that the data packet detection information is sent by sending the policy control request trigger information.

Optionally, the ECN information includes at least one of the following: first ECN information, second ECN information, and third ECN information;
the first ECN information is information used to indicate a first value;
the second ECN information is information used to indicate a second value; and
the third ECN information is information used to indicate a third value.

In an implementation, the first ECN information, the second ECN information, or the third ECN information may be represented as different values of a ToS Traffic Class field.

In an implementation, the first value, the second value, or the second value may be represented as different values of the ToS Traffic Class field.

Optionally, the first data packet detection information is used to detect a data flow whose uplink data carries a first value;
and/or
the second data packet detection information is used to detect a data flow whose downlink data carries the first value;
   and/or
the third data packet detection information is used to detect a data flow whose uplink data carries a second value;
   and/or
the fourth data packet detection information is used to detect a data flow whose downlink data carries the second value;
   and/or
the fifth data packet detection information is used to detect a data flow whose uplink data carries a third value;
   and/or
the sixth data packet detection information is used to detect a data flow whose downlink data carries the third value;
   and/or
the seventh data packet detection information is used to detect a data flow whose uplink data and/or downlink data carry or carries the first value;
   and/or
the eighth data packet detection information is used to detect a data flow whose uplink data and/or downlink data carry or carries the second value;
   and/or
the ninth data packet detection information is used to detect a data flow whose uplink data and/or downlink data carry or carries the first value or the second value.

Optionally, the first data packet detection information includes one of the following: the first value, and the first value and first source interface information;
the second data packet detection information includes one of the following: the first value, and the first value and second source interface information;
the third data packet detection information includes one of the following: the second value, and the second value and the first source interface information;
the fourth data packet detection information includes one of the following: the second value, and the second value and the second source interface information;
the fifth data packet detection information includes one of the following: the third value, and the third value and the first source interface information;
the sixth data packet detection information includes one of the following: the third value, and the third value and the second source interface information;
the seventh data packet detection information includes the first value;
the seventh data packet detection information includes the second value; and
the eighth data packet detection information includes at least one of the following: the first value and the second value, where
the first source interface information is capable of being used to indicate that a data direction is the uplink; and
the second source interface information is capable of being used to indicate that the data direction is the downlink.

Optionally, the first data packet detection information or the fourth data packet detection information further includes ECN information used to detect downlink data;
and/or
the second data packet detection information or the fifth data packet detection information further includes ECN information used to detect uplink data, where
a value of the ECN information used to detect downlink data includes one of the following: the second value, the second value, and the third value; or the value of the ECN information used to detect downlink data does not include a fourth value; and
a value of the ECN information used to detect uplink data includes any one of the following: the second value, the second value, and the third value; or the value of the ECN information used to detect uplink data does not include the fourth value.

Optionally, the configuring an N^{th} requirement for a data flow includes: configuring an N^{th} QoS identifier for the data flow, where
the first QoS identifier is a QoS identifier used to represent the first requirement;
the second QoS identifier is a QoS identifier used to represent the second requirement;
the third QoS identifier is a QoS identifier used to represent the third requirement;
the fourth QoS identifier is a QoS identifier used to represent the fourth requirement;
the fifth QoS identifier is a QoS identifier used to represent the fifth requirement;
the sixth QoS identifier is a QoS identifier used to represent the sixth requirement; and
the seventh QoS identifier is a QoS identifier used to represent the seventh requirement.

In an implementation, the QoS identifier includes a 5QI.

Optionally, the configuring an N^{th} requirement for a data flow includes: configuring the N^{th} requirement for the data flow in a case that a tenth condition is met, where
the tenth condition includes at least one of the following:
the data flow is an N^{th} data flow; and
information used to indicate that the N^{th} data flow starts is obtained; and
the configuring a third requirement for a data flow includes: configuring the third requirement for the data flow in the case that the tenth condition is met, where
the tenth condition includes at least one of the following:
   the data flow is one of the following: a first data flow, a second data flow, and a third data flow; and
   information used to indicate that the first data flow starts is obtained.

Optionally, the first data flow is a data flow that meets at least one of the following:
a data flow of which the uplink supports the ECN operation for L4S and/or requires the ECN operation for L4S, a data flow for which a value of ECN information of uplink data is the first value, or a data flow that conforms to the first data packet detection information; and
a data flow of which the downlink does not support the ECN operation for L4S and/or does not require the ECN operation for L4S, a data flow for which a value of ECN information of downlink data does not include the first value, or a data flow that does not conform to the second data packet detection information;
   and/or
the second data flow is a data flow that meets at least one of the following:
   a data flow of which the uplink does not support the ECN operation for L4S and/or does not require the ECN operation for L4S, a data flow for which a value of ECN information of uplink data does not include the first value, or a data flow that does not conform to the first data packet detection information; and
   a data flow of which the downlink supports the ECN operation for L4S and/or requires the ECN operation for L4S, a data flow for which a value of ECN information of downlink data includes the first value, or a data flow that conforms to the second data packet detection information;
      and/or
   the third data flow is a data flow that meets at least one of the following:
      a data flow of which the uplink and/or downlink supports the ECN operation for L4S and/or requires the ECN operation for L4S;
      a data flow for which a value of ECN information of uplink data and/or a value of ECN information of downlink data are or is the first value;
      a data flow that conforms to the first data packet detection information and/or the second data packet detection information; and
      a data flow that conforms to the seventh data packet detection information;
         and/or
      the fourth data flow is a data flow that meets at least one of the following:
         a data flow of which the uplink supports the first ECN operation and/or requires the first ECN operation, a data flow for which a value of ECN information of uplink data is the second value, or a data flow that conforms to the third data packet detection information; and
         a data flow of which the downlink does not support the first ECN operation and/or does not require the first ECN operation, a data flow for which a value of ECN information of downlink data does not include the second value, or a data flow that does not conform to the fourth data packet detection information;
            and/or
         the fifth data flow is a data flow that meets at least one of the following:
            a data flow of which the uplink does not support the first ECN operation and/or does not require the first ECN operation, a data flow for which a value of ECN information of uplink data does not include the second value, or a data flow that does not conform to the third data packet detection information; and
            a data flow of which the downlink supports the first ECN operation and/or requires the first ECN operation, a data flow for which a value of ECN information of downlink data is the second value, or a data flow that conforms to the fourth data packet detection information;
               and/or
            the sixth data flow is a data flow that meets at least one of the following:
               a data flow of which the uplink and/or downlink supports the first ECN operation and/or requires the first ECN operation;
               a data flow for which a value of ECN information of uplink data and/or a value of ECN information of downlink data are or is the second value;
               a data flow that conforms to the third data packet detection information and/or the fourth data packet detection information; and
               a data flow that conforms to the eighth data packet detection information;
                  and/or
               the seventh data flow is a data flow that meets at least one of the following:
                  a data flow of which the uplink supports the first ECN operation or the ECN operation for L4S and/or requires the first ECN operation or the ECN operation for L4S;
                  a data flow of which the downlink supports the first ECN operation or the ECN operation for L4S and/or requires the first ECN operation or the ECN operation for L4S;
                  a data flow for which a value of ECN information of uplink data is the first value or the second value;
                  a data flow for which a value of ECN information of downlink data is the first value or the second value; and
                  a data flow that conforms to at least one of the following: the first data packet detection information, the second data packet detection information, the third data packet detection information, the fourth data packet detection information, the fifth data packet detection information, the sixth data packet detection information, the seventh data packet detection information, the eighth data packet detection information, and the ninth data packet detection information.

Optionally, the first data flow further meets at least one of the following:
a data flow of which the downlink supports the first ECN operation and/or requires the first ECN operation;
a data flow for which a value of ECN information of downlink data is the second value or a data flow that conforms to the fourth data packet detection information; and
a data flow for which a value of ECN information of downlink data is the third value or a data flow that conforms to the sixth data packet detection information;
   and/or
the second data flow further meets at least one of the following:
   a data flow of which the uplink supports the first ECN operation and/or requires the first ECN operation;
   a data flow for which a value of ECN information of uplink data is the second value or a data flow that conforms to the third data packet detection information; and
   a data flow for which a value of ECN information of uplink data is the third value or a data flow that conforms to the fifth data packet detection information;
      and/or
   the fourth data flow further meets at least one of the following:
      a data flow of which the downlink supports the ECN operation for L4S and/or requires the ECN operation for L4S;
      a data flow for which a value of ECN information of downlink data is the first value or a data flow that conforms to the second data packet detection information; and
      a data flow for which a value of ECN information of downlink data is the third value or a data flow that conforms to the sixth data packet detection information;
         and/or
      the fifth data flow further meets at least one of the following:
         a data flow of which the uplink supports the ECN operation for L4S and/or requires the ECN operation for L4S;
         a data flow for which a value of ECN information of uplink data is the first value or a data flow that conforms to the first data packet detection information; and
         a data flow for which a value of ECN information of uplink data is the third value or a data flow that conforms to the fifth data packet detection information.

In an implementation, the policy control request trigger information includes at least one of the following:
a first policy control request trigger, where data packet detection information corresponding to the first policy control request trigger includes the first data packet detection information;
a second policy control request trigger, where data packet detection information corresponding to the second policy control request trigger includes the second data packet detection information;
a third policy control request trigger, where data packet detection information corresponding to the third policy control request trigger includes the third data packet detection information;
a fourth policy control request trigger, where data packet detection information corresponding to the fourth policy control request trigger includes the fourth data packet detection information;
a fifth policy control request trigger, where data packet detection information corresponding to the fifth policy control request trigger includes the fifth data packet detection information;
a sixth policy control request trigger, where data packet detection information corresponding to the sixth policy control request trigger includes the sixth data packet detection information;
a seventh policy control request trigger, where data packet detection information corresponding to the seventh policy control request trigger includes the seventh data packet detection information;
an eighth policy control request trigger, where data packet detection information corresponding to the eighth policy control request trigger includes the eighth data packet detection information; and
a ninth policy control request trigger, where data packet detection information corresponding to the ninth policy control request trigger includes the ninth data packet detection information.

In this embodiment of this application, data packet detection information including ECN information is determined, so that it can be monitored whether a target data flow starts. A corresponding congestion monitoring and/or congestion reporting requirement is set for a starting target data flow, and classification-based QoS flow mapping is implemented, so that uniform congestion monitoring is used for QoS flows, for example, only uplink congestion occurrence is monitored, only downlink congestion occurrence is monitored, or it is monitored whether congestion occurs on an uplink and a downlink, thereby better supporting, in a mobile cellular network segment, a technology corresponding to congestion marking.

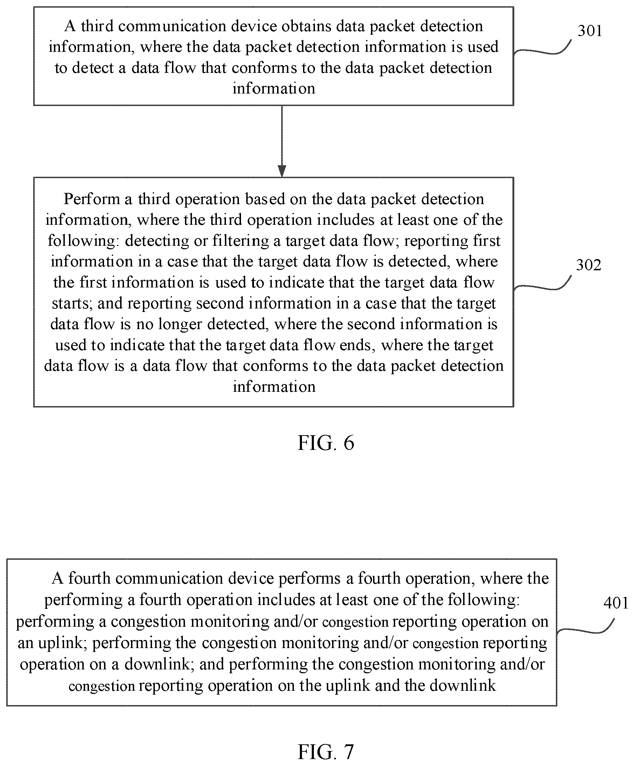

Referring to FIG. 6, an embodiment of this application provides an information processing method, applied to a third communication device. The third communication device includes but is not limited to a CN network element (for example, a gateway and a user plane function UPF). In this case, the CN network element may be referred to as a third CN network element, and the method includes the following step:

Step 301: The third communication device obtains data packet detection information, where the data packet detection information is used to detect a data flow that conforms to the data packet detection information; and
performs a third operation based on the data packet detection information, where the third operation includes at least one of the following:
detecting or filtering a target data flow;
reporting first information in a case that the target data flow is detected, where the first information is used to indicate that the target data flow starts; and
reporting second information in a case that the target data flow is no longer detected, where the second information is used to indicate that the target data flow ends, where
the target data flow is a data flow that conforms to the data packet detection information; and
the data packet detection information includes at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information.

Optionally, the third communication device obtains the first information from a first source end, and the first source end includes one of the following: an SMF and a first communication device.

Optionally, the third communication device reports the start of a data flow or the end of a data flow to the first source end.

The ECN information is represented as 2-bit value information of the ECN information.

In an implementation, the data packet detection information is included in a data packet detection rule for receiving.

Optionally, the ECN information includes at least one of the following: first ECN information, second ECN information, and third ECN information;
the first ECN information is information used to indicate a first value;
the second ECN information is information used to indicate a second value; and
the third ECN information is information used to indicate a third value.

In an implementation, the ECN information is a value of an ECN mark bit in the IP protocol.

In an implementation, the ECN information is represented in a ToS Traffic Class field, for example, 2 least significant bits.

In an implementation, the first value, the second value, or the second value may be represented as different values of the ToS Traffic Class field.

In an implementation, the first ECN information, the second ECN information, or the third ECN information may be represented as different values of the ToS Traffic Class field.

Optionally, the first data packet detection information is used to detect a data flow whose uplink data carries a first value;
and/or
the second data packet detection information is used to detect a data flow whose downlink data carries the first value;
   and/or
the third data packet detection information is used to detect a data flow whose uplink data carries a second value;
   and/or
the fourth data packet detection information is used to detect a data flow whose downlink data carries the second value;
   and/or
the fifth data packet detection information is used to detect a data flow whose uplink data carries a third value;
   and/or
the sixth data packet detection information is used to detect a data flow whose downlink data carries the third value;
   and/or
the seventh data packet detection information is used to detect a data flow whose uplink data and/or downlink data carry or carries the first value;
   and/or
the eighth data packet detection information is used to detect a data flow whose uplink data and/or downlink data carry or carries the second value;
   and/or
the ninth data packet detection information is used to detect a data flow whose uplink data and/or downlink data carry or carries the first value or the second value.

Optionally, the first data packet detection information includes one of the following: the first value, and the first value and first source interface information;
the second data packet detection information includes one of the following: the first value, and the first value and second source interface information;
the third data packet detection information includes one of the following: the second value, and the second value and the first source interface information;
the fourth data packet detection information includes one of the following: the second value, and the second value and the second source interface information;
the fifth data packet detection information includes one of the following: the third value, and the third value and the first source interface information;
the sixth data packet detection information includes one of the following: the third value, and the third value and the second source interface information;
the seventh data packet detection information includes the first value;
the seventh data packet detection information includes the second value; and
the eighth data packet detection information includes at least one of the following: the first value and the second value, where
the first source interface information is capable of being used to indicate that a data direction is the uplink; and
the second source interface information is capable of being used to indicate that the data direction is the downlink.

The first value, the second value, or the third value may be represented as different values of the ToS Traffic Class field.

Optionally, the uplink and the downlink may be determined by using a source interface (Source Interface) in the data packet detection information. For example, if a value of the source interface is "Core", the direction is the downlink; and if the value of the source interface is "Access", the direction is the uplink. The "Access" and "Core" values denote an uplink and downlink traffic direction respectively.

Optionally, the first data packet detection information or the fourth data packet detection information further includes ECN information used to detect downlink data;
and/or
the second data packet detection information or the fifth data packet detection information further includes ECN information used to detect uplink data,
where
a value of the ECN information used to detect downlink data includes one of the following: the second value, the second value, and the third value; or the value of the ECN information used to detect downlink data does not include a fourth value; and
a value of the ECN information used to detect uplink data includes any one of the following: the second value, the second value, and the third value; or the value of the ECN information used to detect uplink data does not include the fourth value.

Optionally, the first value is used to indicate that an ECN operation for L4S is supported and/or required;
the second value is used to indicate that a first ECN operation is supported and/or required;
the third value is used to indicate congestion experienced;
the fourth value is used to indicate that explicit congestion notification is not supported; and
the first ECN operation does not include the ECN operation for L4S.

In an implementation, the first ECN operation is classic ECN.

In an implementation, the first ECN operation does not include L4S or the ECN operation for L4S.

Optionally, a representation form of the first value is one of the following: 10, 2, and ECT(1);
a representation form of the second value is one of the following: 01, 1, and ECT(0);
a representation form of the third value is one of the following: 11, 3, and congestion experienced CE; and
a representation form of the fourth value is one of the following: 00, 0, and no ECN.

In this embodiment of this application, data packet detection information including ECN information is determined, so that it can be monitored whether a target data flow starts. A corresponding congestion monitoring and/or congestion reporting requirement is set for a starting target data flow, and classification-based QoS flow mapping is implemented, so that uniform congestion monitoring is used for QoS flows, for example, only uplink congestion occurrence is monitored, only downlink congestion occurrence is monitored, or it is monitored whether congestion occurs on an uplink and a downlink, thereby better supporting, in a mobile cellular network segment, a technology corresponding to congestion marking.

Referring to FIG. 7, an embodiment of this application provides an information processing method, applied to a fourth communication device. The fourth communication device includes but is not limited to a CN network element (for example, a UPF) or a RAN network element. In this case, the CN network element may be referred to as a fourth CN network element, and the method includes the following step:

Step 401: The fourth communication device performs a fourth operation, where the performing a fourth operation includes at least one of the following:
performing a congestion monitoring and/or congestion reporting operation on an uplink;
performing the congestion monitoring and/or congestion reporting operation on a downlink; and
performing the congestion monitoring and/or congestion reporting operation on the uplink and the downlink.

Optionally, the performing a congestion monitoring and/or congestion reporting operation on an uplink includes one of the following: performing an ECN operation for L4S on the uplink, and performing a first ECN operation on the uplink;
the performing the congestion monitoring and/or congestion reporting operation on a downlink includes one of the following: performing the ECN operation for L4S on the downlink, and performing the first ECN operation on the downlink; and
the performing the congestion monitoring and/or congestion reporting operation on the uplink and the downlink includes one of the following: performing the ECN operation for L4S on the uplink and the downlink, and performing the first ECN operation on the uplink and the downlink.

Optionally, the performing a congestion monitoring and/or congestion reporting operation on an uplink includes at least one of the following:
when congestion occurs on the uplink, enabling an uplink data packet to carry information indicating that congestion occurs, or enabling an uplink data packet to carry information indicating that congestion occurs on the uplink; and
sending the uplink data packet;
   and/or
the performing an ECN operation for L4S on the uplink includes at least one of the following:
   when congestion corresponding to L4S occurs on the uplink, enabling an uplink data packet to carry information indicating that congestion occurs, or enabling an uplink data packet to carry information indicating that congestion occurs on the uplink; and
   sending the uplink data packet;
   and/or the performing the congestion monitoring and/or congestion reporting operation on a downlink includes at least one of the following:
      when congestion occurs on the downlink, enabling a downlink data packet to carry information indicating that congestion occurs, or enabling an uplink data packet to carry information indicating that congestion occurs on the downlink; and
      sending the data packet;
         and/or
      the performing the ECN operation for L4S on the downlink includes at least one of the following:
         when congestion corresponding to L4S occurs on the downlink, enabling a downlink data packet to carry information indicating that congestion occurs, or enabling an uplink data packet to carry information indicating that congestion occurs on the downlink; and
         sending the data packet;
            and/or
         the performing the ECN operation for L4S on the uplink and the downlink includes the performing an ECN operation for L4S on the uplink and/or the performing the ECN operation for L4S on the downlink;
            and/or
         the performing a first ECN operation on the uplink includes at least one of the following:
            when congestion corresponding to ECN occurs on the uplink, enabling an uplink data packet to carry information indicating that congestion occurs, or enabling an uplink data packet to carry information indicating that congestion occurs on the uplink; and
            sending the uplink data packet;
               and/or
            the performing the first ECN operation on the downlink includes at least one of the following:
               when congestion corresponding to ECN occurs on the downlink, enabling a downlink data packet to carry information indicating that congestion occurs, or enabling an uplink data packet to carry information indicating that congestion occurs on the downlink; and
               sending the data packet; and
               the performing the first ECN operation on the uplink and the downlink includes the performing a first ECN operation on the uplink and/or the performing the first ECN operation on the downlink.

In this step, the fourth communication device is the RAN.

Optionally, that congestion (corresponding to L4S or ECN) occurs on the uplink means that congestion occurs on an uplink of a first object. In this case, the uplink data packet is an uplink data packet of the first object.

Optionally, that congestion (corresponding to L4S or ECN) occurs on the downlink means that congestion occurs on a downlink of the first object. In this case, the downlink data packet is a downlink data packet of the first object.

Optionally, the first object includes one of the following: a QoS flow, a radio bearer, a logical channel, and a terminal.

Optionally, the performing a congestion monitoring and/or congestion reporting operation on an uplink, the performing a first ECN operation on the uplink, or the performing an ECN operation for L4S on the uplink includes at least one of the following:
enabling, on the basis that an uplink data packet carries information indicating that congestion occurs on the uplink, the uplink data packet to carry information indicating that congestion occurs; and
sending the uplink data packet;
   and/or
the performing the congestion monitoring and/or congestion reporting operation on the downlink, the performing the first ECN operation on the downlink, or the performing the ECN operation for L4S on the downlink includes at least one of the following:
   enabling, on the basis that an uplink data packet carries information indicating that congestion occurs on the downlink, a downlink data packet to carry information indicating that congestion occurs; and
   sending the downlink data packet.

Optionally, in this step, the fourth communication device is the UPF.

Optionally, in a case that a first condition is met, the fourth communication device performs the ECN operation for L4S on the uplink, or performs the congestion monitoring and/or congestion reporting operation on the uplink; and
the first condition includes at least one of the following:
a value of ECN information of received uplink data of the first object is a first value;
a value of ECN information of received downlink data of the first object does not include a fourth value, or the value of the ECN information of the received downlink data of the first object is one of the following: the first value, a second value, and a third value;
congestion corresponding to L4S occurs on the uplink of the first object; and
a first requirement, a third requirement, or a seventh requirement corresponding to the first object is obtained,
where
the first requirement is used to require one of the following: performing the ECN operation for L4S on the uplink, and performing the congestion monitoring and/or congestion reporting operation on the uplink;
the third requirement is used to require one of the following: performing the ECN operation for L4S on the uplink and/or the downlink, and performing the congestion monitoring and/or congestion reporting operation on the uplink and/or the downlink;
the seventh requirement is used to require at least one of the following: performing the first ECN operation and/or the ECN operation for L4S on the uplink and/or the downlink, and performing the congestion monitoring and/or congestion reporting operation on the uplink and/or the downlink; and
the first object is one of the following: a first QoS flow, a radio bearer to which the first QoS flow is mapped, a logical channel to which the first QoS flow is mapped, and a terminal.

Optionally, in a case that a second condition is met, the fourth communication device performs the ECN operation for L4S on the downlink, or performs the congestion monitoring and/or congestion reporting operation on the downlink; and
the second condition includes at least one of the following:
a value of ECN information of received downlink data of the first object is a first value;
a value of ECN information of received uplink data of the first object does not include a fourth value, or the value of the ECN information of the received uplink data of the first object is one of the following: the first value, a second value, and a third value;
congestion corresponding to L4S occurs on the downlink of the first object; and
a second requirement, a third requirement, or a seventh requirement corresponding to the first object is obtained,
where
the second requirement is used to require one of the following: performing the ECN operation for L4S on the downlink, and performing the congestion monitoring and/or congestion reporting operation on the downlink;
the third requirement is used to require one of the following: performing the ECN operation for L4S on the uplink and/or the downlink, and performing the congestion monitoring and/or congestion reporting operation on the uplink and/or the downlink;
the seventh requirement is used to require at least one of the following: performing the first ECN operation and/or the ECN operation for L4S on the uplink and/or the downlink, and performing the congestion monitoring and/or congestion reporting operation on the uplink and/or the downlink; and
the first object is one of the following: a first QoS flow, a radio bearer to which the first QoS flow is mapped, a logical channel to which the first QoS flow is mapped, and a terminal.

Optionally, in a case that a third condition is met, the fourth communication device performs the first ECN operation on the uplink, or performs the congestion monitoring and/or congestion reporting operation on the uplink; and
the third condition includes at least one of the following:
a value of ECN information of received uplink data of the first object is a second value;
a value of ECN information of received downlink data of the first object does not include a fourth value, or the value of the ECN information of the received downlink data of the first object is one of the following: a first value, the second value, and a third value;
congestion corresponding to ECN occurs on the uplink of the first object; and
a fourth requirement, a sixth requirement, or a seventh requirement corresponding to the first object is obtained,
where
the fourth requirement is used to require one of the following: performing a first ECN operation on the uplink, and performing the congestion monitoring and/or congestion reporting operation on the uplink;
the sixth requirement is used to require one of the following: performing the first ECN operation on the uplink and/or the downlink, and performing the congestion monitoring and/or congestion reporting operation on the uplink and/or the downlink;
the seventh requirement is used to require at least one of the following: performing the first ECN operation and/or the ECN operation for L4S on the uplink and/or the downlink, and performing the congestion monitoring and/or congestion reporting operation on the uplink and/or the downlink; and
the first object is one of the following: a first QoS flow, a radio bearer to which the first QoS flow is mapped, a logical channel to which the first QoS flow is mapped, and a terminal.

Optionally, in a case that a fourth condition is met, the fourth communication device performs the first ECN operation on the downlink, or performs the congestion monitoring and/or congestion reporting operation on the downlink; and
the fourth condition includes at least one of the following:
a value of ECN information of received downlink data of the first object is a second value;
a value of ECN information of received uplink data of the first object does not include a fourth value, or the value of the ECN information of the received uplink data of the first object is one of the following: a first value, the second value, and a third value;
congestion corresponding to ECN occurs on the downlink of the first object; and
a fifth requirement, a sixth requirement, or a seventh requirement corresponding to the first object is obtained,
where
the fifth requirement is used to require one of the following: performing the first ECN operation on the downlink, and performing the congestion monitoring and/or congestion reporting operation on the downlink;
the sixth requirement is used to require one of the following: performing the first ECN operation on the uplink and/or the downlink, and performing the congestion monitoring and/or congestion reporting operation on the uplink and/or the downlink;
the seventh requirement is used to require at least one of the following: performing the first ECN operation and/or the ECN operation for L4S on the uplink and/or the downlink, and performing the congestion monitoring and/or congestion reporting operation on the uplink and/or the downlink; and
the first object is one of the following: a first QoS flow, a radio bearer to which the first QoS flow is mapped, a logical channel to which the first QoS flow is mapped, and a terminal.

Optionally, before the performing, by a fourth communication device, a fourth operation, the method further includes:
obtaining third information, where the third information includes at least one of the following: an N^{th} requirement corresponding to a second object and data packet detection information; and
performing the fourth operation based on the third information, where
the data packet detection information includes at least one of the following: ECN information, first data packet detection information, second data packet detection information, third data packet detection information, fourth data packet detection information, fifth data packet detection information, and sixth data packet detection information;
a value of N is one of the following: 1, 2, 3, 4, 5, 6, and 7;
the N^{th} requirement corresponding to the second object is used to require the N^{th} requirement to be performed on the second object; and
the second object includes one of the following: the first QoS flow and the terminal.

Optionally, a representation form of the N^{th} requirement includes one of the following: explicit N^{th} indication information and an N^{th} QoS identifier;
and/or
the third requirement may be represented by using explicit first indication information or second indication information;
   and/or
the sixth requirement may be represented by using explicit fourth indication information or fifth indication information,
where
the value of N is one of the following: 1, 2, 3, 4, 5, 6, and 7;
the N^{th} indication information is used to indicate the N^{th} requirement; and
the N^{th} QoS identifier is used to indicate the N^{th} requirement.

Optionally, the N^{th} requirement is an N^{th} requirement of a QoS flow granularity, and may be carried in signaling of the QoS flow granularity.

Content of N^{th} data packet detection information is specifically described in the embodiment of the third communication device, and details are not described herein again.

Optionally, the fourth communication device obtains an N^{th} requirement (the value of N is 1, 2, 3, 4, 5, or 6) of a first tunnel from a second source end, and the second source end includes one of the following: an SMF and a first communication device.

Optionally, a value of the ECN information includes at least one of the following:
the first value, where the first value is used to indicate that the ECN operation for L4S is supported and/or required;
the second value, where the second value is used to indicate that the first ECN operation is supported and/or required;
the third value, where the third value is used to indicate congestion experienced; and
the fourth value, where the fourth value is used to indicate that explicit congestion notification is not supported, where
the first ECN operation does not include the ECN operation for L4S;
the first ECN operation is classic ECN; and
the first ECN operation does not include L4S or the ECN operation for L4S.

Optionally, a representation form of the first value is one of the following: 10, 2, and ECT(1);
a representation form of the second value is one of the following: 01, 1, and ECT(0);
a representation form of the third value is one of the following: 11, 3, and congestion experienced CE; and
a representation form of the fourth value is one of the following: 00, 0, and no ECN.

Optionally, the first data packet detection information is used to detect a data flow whose uplink data carries the first value;
and/or
the second data packet detection information is used to detect a data flow whose downlink data carries the first value;
   and/or
the third data packet detection information is used to detect a data flow whose uplink data carries the second value;
   and/or
the fourth data packet detection information is used to detect a data flow whose downlink data carries the second value;
   and/or
the fifth data packet detection information is used to detect a data flow whose uplink data carries the third value;
   and/or
the sixth data packet detection information is used to detect a data flow whose downlink data carries the third value;
   and/or
the seventh data packet detection information is used to detect a data flow whose uplink data and/or downlink data carry or carries the first value;
   and/or
the eighth data packet detection information is used to detect a data flow whose uplink data and/or downlink data carry or carries the second value;
   and/or
the ninth data packet detection information is used to detect a data flow whose uplink data and/or downlink data carry or carries the first value or the second value.

Optionally, the first data packet detection information includes one of the following: the first value, and the first value and first source interface information;
the second data packet detection information includes one of the following: the first value, and the first value and second source interface information;
the third data packet detection information includes one of the following: the second value, and the second value and the first source interface information;
the fourth data packet detection information includes one of the following: the second value, and the second value and the second source interface information;
the fifth data packet detection information includes one of the following: the third value, and the third value and the first source interface information;
the sixth data packet detection information includes one of the following: the third value, and the third value and the second source interface information;
the seventh data packet detection information includes the first value;
the seventh data packet detection information includes the second value; and
the eighth data packet detection information includes at least one of the following: the first value and the second value, where
the first source interface information is capable of being used to indicate that a data direction is the uplink; and
the second source interface information is capable of being used to indicate that the data direction is the downlink.

Optionally, the first data packet detection information or the fourth data packet detection information further includes ECN information used to detect downlink data;
and/or
the second data packet detection information or the fifth data packet detection information further includes ECN information used to detect uplink data, where
a value of the ECN information used to detect downlink data includes one of the following: the second value, the second value, and the third value; or the value of the ECN information used to detect downlink data does not include the fourth value; and
a value of the ECN information used to detect uplink data includes any one of the following: the second value, the second value, and the third value; or the value of the ECN information used to detect uplink data does not include the fourth value.

In this embodiment of this application, data packet detection information including ECN information is determined, so that it can be monitored whether a target data flow starts. A corresponding congestion monitoring and/or congestion reporting requirement is set for a starting target data flow, and classification-based QoS flow mapping is implemented, so that uniform congestion monitoring is used for QoS flows, for example, only uplink congestion occurrence is monitored, only downlink congestion occurrence is monitored, or it is monitored whether congestion occurs on an uplink and a downlink, thereby better supporting, in a mobile cellular network segment, a technology corresponding to congestion marking.

The following describes the information processing method in embodiments of this application with reference to specific application scenarios.

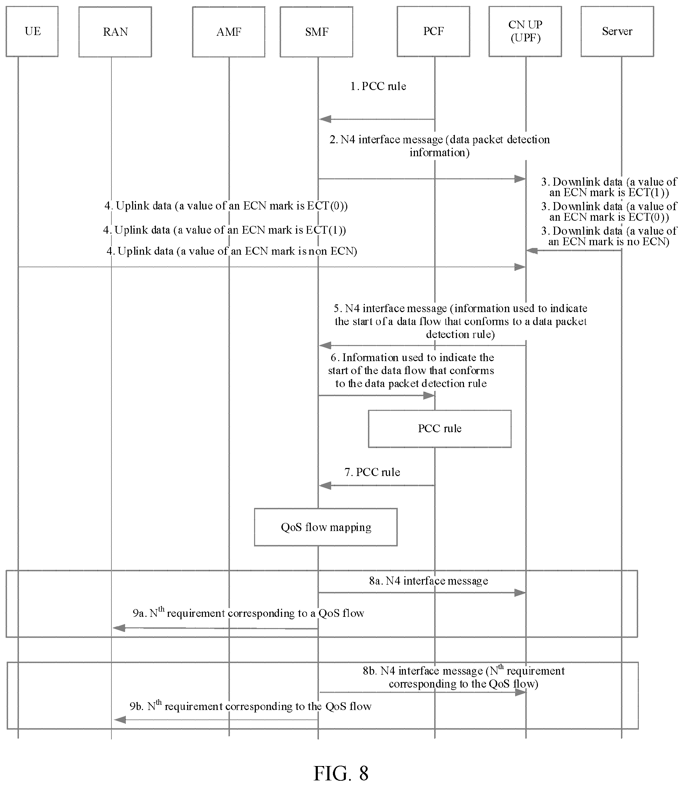

Application scenario 1 of embodiments of this application: As shown in FIG. 8, the following steps are included.

Step 1: A PCF sends a PCC rule to an SMF.

The PCC rule includes policy control request trigger (Policy Control Request Trigger, PCRT) information, and the policy control request trigger information is used to require reporting (reporting of the start and the end of a data flow) to be performed in a case that a data flow that conforms to data packet detection information is detected. Information included in the data packet detection information is described in the embodiment of FIG. 4 (for example, ECN information). The data packet detection information is used to detect a target data flow that conforms to the data packet detection information.

Step 2: The SMF sends an N4 interface message to a UPF.

For example, the N4 interface message includes a data packet detection rule, the data packet detection rule includes the data packet detection information, and the information included in the data packet detection information is described in the embodiment of FIG. 4 (for example, the ECN information).

Step 3: A server sends downlink data to the UPF.

For example, a value of ECN information is ECT(1), or the value of the ECN information is ECT(0), or the value of the ECN information is no ECN.

Step 4: UE sends uplink data to the UPF.

For example, a value of ECN information is ECT(0), or the value of ECN information is ECT(1), or the value of ECN information is no ECN.

Step 5: The UPF sends an N4 interface message to the SMF, where the N4 interface message is used to indicate the start of a data flow that conforms to the data packet detection rule.

Step 6: The SMF sends, to the PCF, information used to indicate the start of the data flow that conforms to the data packet detection rule.

The PCF configures an N^{th} requirement for the target data flow, including mapping a QoS identifier of the target data flow to an N^{th} QoS identifier. Details are described in the embodiment of FIG. 5.

Step 7: The PCF sends a PCC rule to the SMF.

The PCC rule includes the N^{th} requirement (for example, the N^{th} QoS identifier) corresponding to the data flow.

The SMF performs a first operation. Details are described in the embodiment of FIG. 4.

For example, the first operation includes configuring an N^{th} requirement for a QoS flow. The SMF may send the N^{th} requirement corresponding to the QoS flow to the UPF and a RAN in two manners.

Manner 1: In 9a, the N^{th} requirement corresponding to the QoS flow is sent to the RAN network element. In this case, a first ECN operation or a first L4S-based ECN operation is performed by the RAN.

Manner 2: In 9b, the N^{th} requirement corresponding to the QoS flow is sent to the RAN and the UPF. In this case, a first ECN operation or a first L4S-based ECN operation needs to be performed by the RAN and the UPF together through cooperation.

Step 8a: The SMF sends an N4 interface message to the UPF.

Step 9a: The SMF sends the N^{th} requirement corresponding to the QoS flow to the RAN.

Step 8b: The SMF sends an N4 interface message to the UPF, where the N4 interface message includes the N^{th} requirement corresponding to the QoS flow.

Step 9b: The SMF sends the N^{th} requirement corresponding to the QoS flow to the RAN.

The RAN or the UPF receives the N^{th} requirement corresponding to the QoS flow, and performs a fourth operation. Details are described in the embodiment of FIG. 7.

Application scenario 2 of embodiments of this application:

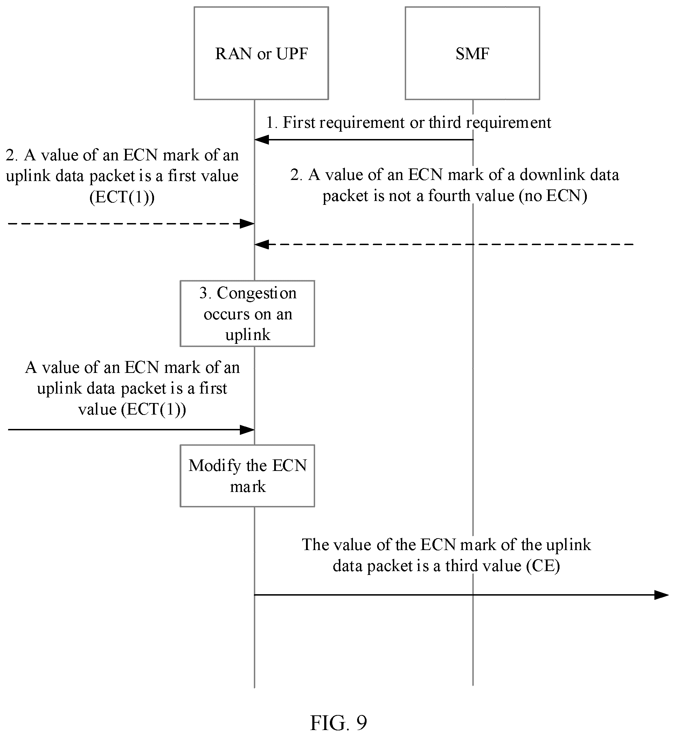

The application scenario 2 of embodiments of this application mainly describes a process of performing congestion marking on uplink data. As shown in FIG. 9, the following steps are included.

Step 1: An SMF sends a first requirement, a third requirement, or a seventh requirement to a RAN or a UPF.

Step 2a: The RAN or the UPF receives an uplink data packet, where a value of ECN information of the uplink data packet is a first value (ECT(1)).

Step 2b: The RAN or the UPF receives a downlink data packet, where a value of ECN information of the downlink data packet is not a fourth value (that is, not no ECN).

Step 3: The RAN or the UPF determines that congestion occurs on an uplink.

Step 4: The RAN or the UPF receives an uplink data packet, where a value of ECN information of the uplink data packet is a first value (ECT(1)).

Step 5: The RAN or the UPF modifies the ECN information of the uplink data packet to a third value (CE).

Step 6: The RAN or the UPF sends the uplink data packet.

Application scenario 3 of embodiments of this application:

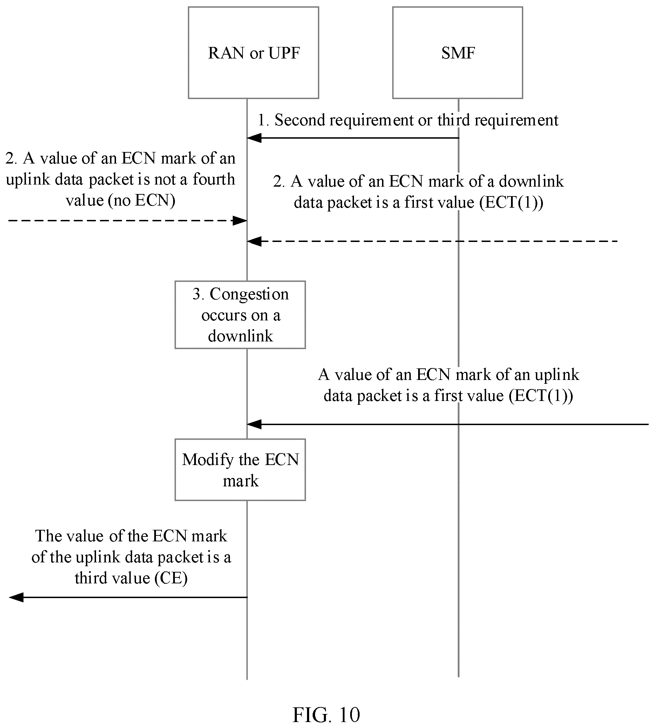

The application scenario 3 of embodiments of this application mainly describes a downlink congestion marking process. As shown in FIG. 10, the following steps are included.

Step 1: An SMF sends a second requirement, a third requirement, or a seventh requirement to a RAN or a UPF.

Step 2a: The RAN or the UPF receives an uplink data packet, where a value of ECN information of the uplink data packet is not a fourth value (that is, not no ECN).

Step 2b: The RAN or the UPF receives a downlink data packet, where a value of ECN information of the downlink data packet is a first value (ECT(1)).

Step 3: The RAN or the UPF determines that congestion occurs on a downlink.

Step 4: The RAN or the UPF receives a downlink data packet, where a value of ECN information of the downlink data packet is a first value (ECT(1)).

Step 5: The RAN or the UPF modifies the value of the ECN information of the downlink data packet to a third value (CE).

Step 6: The RAN or the UPF sends the downlink data packet.

The information processing method provided in embodiments of this application may be performed by a virtual apparatus. In embodiments of this application, an example in which the virtual apparatus performs the information processing method is used to describe an information processing apparatus provided in embodiments of this application.

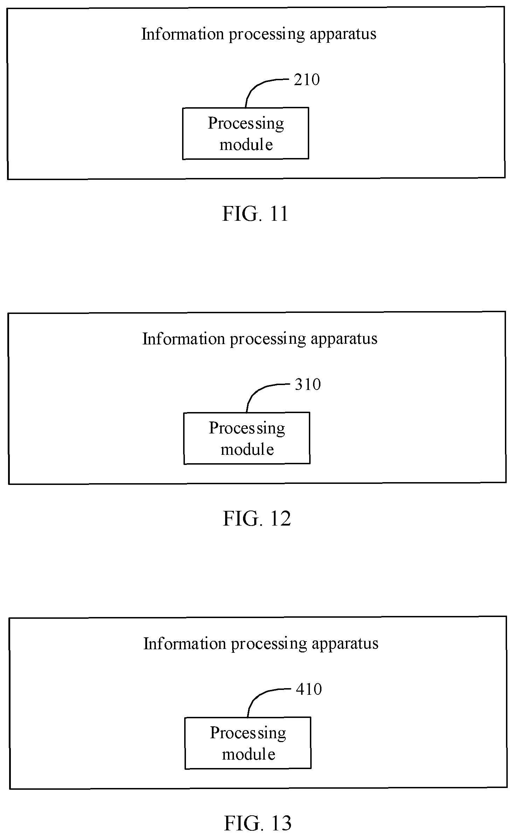

FIG. 11 is a schematic diagram 1 of a structure of an information processing apparatus according to an embodiment of this application. As shown in FIG. 11, the information processing apparatus includes:
a processing module 210, configured to perform a first operation, where the first operation includes at least one of the following:
determining data packet detection information, where the data packet detection information includes at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information;
sending the data packet detection information;
mapping a plurality of data flows to a same QoS flow;
mapping a data flow 1 and a data flow 2 to different QoS flows;
configuring an N^{th} requirement for a QoS flow; and
sending the N^{th} requirement corresponding to the QoS flow, where
a value of N is one of the following: 1, 2, 3, 4, 5, and 6;
a first requirement is used to require one of the following: performing an ECN operation for L4S on an uplink, and performing a congestion monitoring and/or congestion reporting operation on the uplink;
a second requirement is used to require one of the following: performing the ECN operation for L4S on a downlink, and performing the congestion monitoring and/or congestion reporting operation on the downlink;
a third requirement is used to require one of the following: performing the ECN operation for L4S on the uplink and/or the downlink, and performing the congestion monitoring and/or congestion reporting operation on the uplink and/or the downlink;
a fourth requirement is used to require one of the following: performing a first ECN operation on the uplink, and performing the congestion monitoring and/or congestion reporting operation on the uplink;
a fifth requirement is used to require one of the following: performing the first ECN operation on the downlink, and performing the congestion monitoring and/or congestion reporting operation on the downlink;
a sixth requirement is used to require one of the following: performing the first ECN operation on the uplink and/or the downlink, and performing the congestion monitoring and/or congestion reporting operation on the uplink and/or the downlink; and
a seventh requirement is used to require at least one of the following: performing the first ECN operation and/or the ECN operation for L4S on the uplink and/or the downlink, and performing the congestion monitoring and/or congestion reporting operation on the uplink and/or the downlink.

Optionally, the ECN information includes at least one of the following: first ECN information, second ECN information, and third ECN information;
the first ECN information is information used to indicate a first value;
the second ECN information is information used to indicate a second value; and
the third ECN information is information used to indicate a third value.

Optionally, the processing module 210 is specifically configured to:
mapping the plurality of data flows to the same QoS flow in a case that a seventh condition is met, where the seventh condition includes one of the following:
each of the plurality of data flows is a first data flow;
each of the plurality of data flows is a second data flow;
each of the plurality of data flows is a third data flow;
a data flow in the plurality of data flows is one of the following: the first data flow, the second data flow, and the third data flow;
each of the plurality of data flows is a fourth data flow;
each of the plurality of data flows is a fifth data flow;
each of the plurality of data flows is a sixth data flow;
each of the plurality of data flows is a seventh data flow;
a data flow in the plurality of data flows is one of the following: the fourth data flow, the fifth data flow, and the sixth data flow; and
a data flow in the plurality of data flows is one of the following: the first data flow, the second data flow, the third data flow, the fourth data flow, the fifth data flow, and the sixth data flow.

Optionally, the processing module 210 is specifically configured to:
mapping the data flow 1 and the data flow 2 to the different QoS flows in a case that an eighth condition is met, where the eighth condition includes one of the following:
the data flow 1 is an N^{th} data flow, and the data flow 2 is not the N^{th} data flow;
the data flow 1 is an N1^{th} data flow, the data flow 2 is an N2^{th} data flow, and N1 and N2 are different; and
the data flow 1 is a data flow of which the uplink and/or downlink requires the ECN operation for L4S, and the data flow 2 is a data flow of which the uplink and/or downlink requires the first ECN operation, where
a value of N, N1, or N2 is one of the following: 1, 2, 3, 4, 5, 6, and 7.

Optionally, the first data flow is a data flow that meets at least one of the following:
a data flow of which the uplink supports the ECN operation for L4S and/or requires the ECN operation for L4S, a data flow for which a value of ECN information of uplink data is a first value, or a data flow that conforms to the first data packet detection information;
a data flow of which the downlink does not support the ECN operation for L4S and/or does not require the ECN operation for L4S, a data flow for which a value of ECN information of downlink data does not include the first value, or a data flow that does not conform to the second data packet detection information;
a data flow for which a first QoS identifier is configured; and
a data flow for which the first requirement is configured;
   and/or
the second data flow is a data flow that meets at least one of the following:
   a data flow of which the uplink does not support the ECN operation for L4S and/or does not require the ECN operation for L4S, a data flow for which a value of ECN information of uplink data does not include the first value, or a data flow that does not conform to the first data packet detection information;
   a data flow of which the downlink supports the ECN operation for L4S and/or requires the ECN operation for L4S, a data flow for which a value of ECN information of downlink data includes the first value, or a data flow that conforms to the second data packet detection information;
   a data flow for which a second QoS identifier is configured; and
   a data flow for which the second requirement is configured;
      and/or
   the third data flow is a data flow that meets at least one of the following:
      a data flow of which the uplink and/or downlink supports the ECN operation for L4S and/or requires the ECN operation for L4S;
      a data flow for which a value of ECN information of uplink data and/or a value of ECN information of downlink data are or is the first value;
      a data flow that conforms to the first data packet detection information and/or the second data packet detection information;
      a data flow that conforms to the seventh data packet detection information;
      a data flow for which a third QoS identifier is configured; and
      a data flow for which the third requirement is configured;
         and/or
      the fourth data flow is a data flow that meets at least one of the following:
         a data flow of which the uplink supports the first ECN operation and/or requires the first ECN operation, a data flow for which a value of ECN information of uplink data is a second value, or a data flow that conforms to the third data packet detection information;
         a data flow of which the downlink does not support the first ECN operation and/or does not require the first ECN operation, a data flow for which a value of ECN information of downlink data does not include the second value, or a data flow that does not conform to the fourth data packet detection information;
         a data flow for which a fourth QoS identifier is configured; and
         a data flow for which the fourth requirement is configured;
            and/or
         the fifth data flow is a data flow that meets at least one of the following:
            a data flow of which the uplink does not support the first ECN operation and/or does not require the first ECN operation, a data flow for which a value of ECN information of uplink data does not include the second value, or a data flow that does not conform to the third data packet detection information;
            a data flow of which the downlink supports the first ECN operation and/or requires the first ECN operation, a data flow for which a value of ECN information of downlink data is the second value, or a data flow that conforms to the fourth data packet detection information;
            a data flow for which a fifth QoS identifier is configured; and
            a data flow for which the fifth requirement is configured;
               and/or
            the sixth data flow is a data flow that meets at least one of the following:
               a data flow of which the uplink and/or downlink supports the first ECN operation and/or requires the first ECN operation;
               a data flow for which a value of ECN information of uplink data and/or a value of ECN information of downlink data are or is the second value;
               a data flow that conforms to the third data packet detection information and/or the fourth data packet detection information;
               a data flow that conforms to the eighth data packet detection information;
               a data flow for which a sixth QoS identifier is configured; and
               a data flow for which the sixth requirement is configured;
                  and/or
               the seventh data flow is a data flow that meets at least one of the following:
                  a data flow of which the uplink supports the first ECN operation or the ECN operation for L4S and/or requires the first ECN operation or the ECN operation for L4S;
                  a data flow of which the downlink supports the first ECN operation or the ECN operation for L4S and/or requires the first ECN operation or the ECN operation for L4S;
                  a data flow for which a value of ECN information of uplink data is the first value or the second value;
                  a data flow for which a value of ECN information of downlink data is the first value or the second value;
                  a data flow that conforms to at least one of the following: the first data packet detection information, the second data packet detection information, the third data packet detection information, the fourth data packet detection information, the fifth data packet detection information, the sixth data packet detection information, the seventh data packet detection information, the eighth data packet detection information, and the ninth data packet detection information;
                  a data flow for which a seventh QoS identifier is configured; and
                  a data flow for which the seventh requirement is configured.

Optionally, the first data flow further meets at least one of the following:
a data flow of which the downlink supports the first ECN operation and/or requires the first ECN operation;
a data flow for which a value of ECN information of downlink data is the second value or a data flow that conforms to the fourth data packet detection information; and
a data flow for which a value of ECN information of downlink data is a third value or a data flow that conforms to the sixth data packet detection information;
   and/or
the second data flow further meets at least one of the following:
   a data flow of which the uplink supports the first ECN operation and/or requires the first ECN operation;
   a data flow for which a value of ECN information of uplink data is the second value or a data flow that conforms to the third data packet detection information; and
   a data flow for which a value of ECN information of uplink data is the third value or a data flow that conforms to the fifth data packet detection information;
      and/or
   the fourth data flow further meets at least one of the following:
      a data flow of which the downlink supports the ECN operation for L4S and/or requires the ECN operation for L4S;
      a data flow for which a value of ECN information of downlink data is the first value or a data flow that conforms to the second data packet detection information; and
      a data flow for which a value of ECN information of downlink data is the third value or a data flow that conforms to the sixth data packet detection information;
         and/or
      the fifth data flow further meets at least one of the following:
         a data flow of which the uplink supports the ECN operation for L4S and/or requires the ECN operation for L4S;
         a data flow for which a value of ECN information of uplink data is the first value or a data flow that conforms to the first data packet detection information; and
         a data flow for which a value of ECN information of uplink data is the third value or a data flow that conforms to the fifth data packet detection information.

Optionally, the configuring an N^{th} requirement for a QoS flow includes at least one of the following:
configuring the N^{th} requirement for the QoS flow in a case that a ninth condition is met, where
the ninth condition includes at least one of the following:
   a data flow mapped to the QoS flow is an N^{th} data flow;
   a QoS identifier of the data flow mapped to the QoS flow is an N^{th} QoS identifier; and
   the data flow mapped to the target QoS flow has the N^{th} requirement; and
   obtaining information used to indicate that the N^{th} data flow starts, where
   the value of N is one of the following: 1, 2, 3, 4, 5, 6, and 7.

Optionally, the information processing apparatus further includes:
a sending module, configured to send the N^{th} requirement corresponding to the QoS flow, where
the value of N is one of the following: 1, 2, 3, 4, 5, 6, and 7.

Optionally, the information processing apparatus further includes:
an obtaining module, configured to obtain policy control request trigger information and/or the data packet detection information, where the policy control request trigger information is used to require reporting to be performed in a case that a data flow that conforms to the data packet detection information is detected, and the data packet detection information is used to detect a data flow that conforms to the data packet detection information; and
the first communication device performs the first operation based on the policy control request trigger information and/or the data packet detection information.

Optionally, the obtaining module is further configured to obtain first information, where the first information is used to indicate that transmission of a data flow that conforms to the data packet detection information starts; and
the processing module 210 is further configured to perform the first operation based on the first information.

Optionally, a representation form of the N^{th} requirement includes one of the following: explicit N^{th} indication information and the N^{th} QoS identifier;
and/or
the third requirement may be represented by using explicit first indication information or second indication information;
   and/or
the sixth requirement may be represented by using explicit fourth indication information or fifth indication information,
where
the value of N is one of the following: 1, 2, 3, 4, 5, 6, and 7;
the N^{th} indication information is used to indicate the N^{th} requirement; and
the N^{th} QoS identifier is used to indicate the N^{th} requirement.

Optionally, the first data packet detection information is used to detect a data flow whose uplink data carries a first value;
and/or
the second data packet detection information is used to detect a data flow whose downlink data carries the first value;
   and/or
the third data packet detection information is used to detect a data flow whose uplink data carries a second value;
   and/or
the fourth data packet detection information is used to detect a data flow whose downlink data carries the second value;
   and/or
the fifth data packet detection information is used to detect a data flow whose uplink data carries a third value;
   and/or
the sixth data packet detection information is used to detect a data flow whose downlink data carries the third value;
   and/or
the seventh data packet detection information is used to detect a data flow whose uplink data and/or downlink data carry or carries the first value;
   and/or
the eighth data packet detection information is used to detect a data flow whose uplink data and/or downlink data carry or carries the second value;
   and/or
the ninth data packet detection information is used to detect a data flow whose uplink data and/or downlink data carry or carries the first value or the second value.

Optionally, the first data packet detection information includes one of the following: the first value, and the first value and first source interface information;
the second data packet detection information includes one of the following: the first value, and the first value and second source interface information;
the third data packet detection information includes one of the following: the second value, and the second value and the first source interface information;
the fourth data packet detection information includes one of the following: the second value, and the second value and the second source interface information;
the fifth data packet detection information includes one of the following: the third value, and the third value and the first source interface information;
the sixth data packet detection information includes one of the following: the third value, and the third value and the second source interface information;
the seventh data packet detection information includes the first value;
the seventh data packet detection information includes the second value; and
the eighth data packet detection information includes at least one of the following: the first value and the second value, where
the first source interface information is capable of being used to indicate that a data direction is the uplink; and
the second source interface information is capable of being used to indicate that the data direction is the downlink.

FIG. 12 is a schematic diagram 2 of a structure of an information processing apparatus according to an embodiment of this application. As shown in FIG. 12, the information processing apparatus includes:
a processing module 310, configured to perform a second operation, where the second operation includes at least one of the following:
determining policy control request trigger information, where the policy control request trigger information is used to require reporting to be performed in a case that a data flow that conforms to data packet detection information is detected;
determining the data packet detection information, where the data packet detection information is used to detect a data flow that conforms to the data packet detection information;
sending the data packet detection information;
sending the policy control request trigger information; and
configuring an N^{th} requirement for a data flow, where
the data packet detection information includes at least one of the following: ECN information, first data packet detection information, second data packet detection information, third data packet detection information, fourth data packet detection information, fifth data packet detection information, sixth data packet detection information, seventh data packet detection information, eighth data packet detection information, and ninth data packet detection information;
a value of N is one of the following: 1, 2, 3, 4, 5, and 6;
a first requirement is used to require one of the following: performing an ECN operation for L4S on an uplink, and performing a congestion monitoring and/or congestion reporting operation on the uplink;
a second requirement is used to require one of the following: performing the ECN operation for L4S on a downlink, and performing the congestion monitoring and/or congestion reporting operation on the downlink;
a third requirement is used to require one of the following: performing the ECN operation for L4S on the uplink and/or the downlink, and performing the congestion monitoring and/or congestion reporting operation on the uplink and/or the downlink;
a fourth requirement is used to require one of the following: performing a first ECN operation on the uplink, and performing the congestion monitoring and/or congestion reporting operation on the uplink;
a fifth requirement is used to require one of the following: performing the first ECN operation on the downlink, and performing the congestion monitoring and/or congestion reporting operation on the downlink;
a sixth requirement is used to require one of the following: performing the first ECN operation on the uplink and/or the downlink, and performing the congestion monitoring and/or congestion reporting operation on the uplink and/or the downlink; and
a seventh requirement is used to require at least one of the following: performing the first ECN operation and/or the ECN operation for L4S on the uplink and/or the downlink, and performing the congestion monitoring and/or congestion reporting operation on the uplink and/or the downlink.

Optionally, the ECN information includes at least one of the following: first ECN information, second ECN information, and third ECN information;
the first ECN information is information used to indicate a first value;
the second ECN information is information used to indicate a second value; and
the third ECN information is information used to indicate a third value.

Optionally, the first data packet detection information is used to detect a data flow whose uplink data carries a first value;
and/or
the second data packet detection information is used to detect a data flow whose downlink data carries the first value;
   and/or
the third data packet detection information is used to detect a data flow whose uplink data carries a second value;
   and/or
the fourth data packet detection information is used to detect a data flow whose downlink data carries the second value;
   and/or
the fifth data packet detection information is used to detect a data flow whose uplink data carries a third value;
   and/or
the sixth data packet detection information is used to detect a data flow whose downlink data carries the third value;
   and/or
the seventh data packet detection information is used to detect a data flow whose uplink data and/or downlink data carry or carries the first value;
   and/or
the eighth data packet detection information is used to detect a data flow whose uplink data and/or downlink data carry or carries the second value;
   and/or
the ninth data packet detection information is used to detect a data flow whose uplink data and/or downlink data carry or carries the first value or the second value.

Optionally, the first data packet detection information includes one of the following: the first value, and the first value and first source interface information;
the second data packet detection information includes one of the following: the first value, and the first value and second source interface information;
the third data packet detection information includes one of the following: the second value, and the second value and the first source interface information;
the fourth data packet detection information includes one of the following: the second value, and the second value and the second source interface information;
the fifth data packet detection information includes one of the following: the third value, and the third value and the first source interface information;
the sixth data packet detection information includes one of the following: the third value, and the third value and the second source interface information;
the seventh data packet detection information includes the first value;
the seventh data packet detection information includes the second value; and
the eighth data packet detection information includes at least one of the following: the first value and the second value, where
the first source interface information is capable of being used to indicate that a data direction is the uplink; and
the second source interface information is capable of being used to indicate that the data direction is the downlink.

Optionally, the first data packet detection information or the fourth data packet detection information further includes ECN information used to detect downlink data;
and/or
the second data packet detection information or the fifth data packet detection information further includes ECN information used to detect uplink data, where
a value of the ECN information used to detect downlink data includes one of the following: the second value, the second value, and the third value; or the value of the ECN information used to detect downlink data does not include a fourth value; and
a value of the ECN information used to detect uplink data includes any one of the following: the second value, the second value, and the third value; or the value of the ECN information used to detect uplink data does not include the fourth value.

Optionally, the processing module 310 is specifically configured to:
configure an N^{th} QoS identifier for a data flow, where
the first QoS identifier is a QoS identifier used to represent the first requirement;
the second QoS identifier is a QoS identifier used to represent the second requirement;
the third QoS identifier is a QoS identifier used to represent the third requirement;
the fourth QoS identifier is a QoS identifier used to represent the fourth requirement;
the fifth QoS identifier is a QoS identifier used to represent the fifth requirement;
the sixth QoS identifier is a QoS identifier used to represent the sixth requirement; and
the seventh QoS identifier is a QoS identifier used to represent the seventh requirement.

Optionally, the N^{th} requirement is configured for the data flow in a case that a tenth condition is met, where
the tenth condition includes at least one of the following:
the data flow is an N^{th} data flow; and
information used to indicate that the N^{th} data flow starts is obtained; and
the configuring a third requirement for a data flow includes: configuring the third requirement for the data flow in the case that the tenth condition is met, where
the tenth condition includes at least one of the following:
   the data flow is one of the following: a first data flow, a second data flow, and a third data flow; and
   information used to indicate that the first data flow starts is obtained.

Optionally, the first data flow is a data flow that meets at least one of the following:
a data flow of which the uplink supports the ECN operation for L4S and/or requires the ECN operation for L4S, a data flow for which a value of ECN information of uplink data is the first value, or a data flow that conforms to the first data packet detection information; and
a data flow of which the downlink does not support the ECN operation for L4S and/or does not require the ECN operation for L4S, a data flow for which a value of ECN information of downlink data does not include the first value, or a data flow that does not conform to the second data packet detection information;
   and/or
the second data flow is a data flow that meets at least one of the following:
   a data flow of which the uplink does not support the ECN operation for L4S and/or does not require the ECN operation for L4S, a data flow for which a value of ECN information of uplink data does not include the first value, or a data flow that does not conform to the first data packet detection information; and
   a data flow of which the downlink supports the ECN operation for L4S and/or requires the ECN operation for L4S, a data flow for which a value of ECN information of downlink data includes the first value, or a data flow that conforms to the second data packet detection information;
      and/or
   the third data flow is a data flow that meets at least one of the following:
      a data flow of which the uplink and/or downlink supports the ECN operation for L4S and/or requires the ECN operation for L4S;
      a data flow for which a value of ECN information of uplink data and/or a value of ECN information of downlink data are or is the first value;
      a data flow that conforms to the first data packet detection information and/or the second data packet detection information; and
      a data flow that conforms to the seventh data packet detection information;
         and/or
      the fourth data flow is a data flow that meets at least one of the following:
         a data flow of which the uplink supports the first ECN operation and/or requires the first ECN operation, a data flow for which a value of ECN information of uplink data is the second value, or a data flow that conforms to the third data packet detection information; and
         a data flow of which the downlink does not support the first ECN operation and/or does not require the first ECN operation, a data flow for which a value of ECN information of downlink data does not include the second value, or a data flow that does not conform to the fourth data packet detection information;
            and/or
         the fifth data flow is a data flow that meets at least one of the following:
            a data flow of which the uplink does not support the first ECN operation and/or does not require the first ECN operation, a data flow for which a value of ECN information of uplink data does not include the second value, or a data flow that does not conform to the third data packet detection information; and
            a data flow of which the downlink supports the first ECN operation and/or requires the first ECN operation, a data flow for which a value of ECN information of downlink data is the second value, or a data flow that conforms to the fourth data packet detection information;
               and/or
            the sixth data flow is a data flow that meets at least one of the following:
               a data flow of which the uplink and/or downlink supports the first ECN operation and/or requires the first ECN operation;
               a data flow for which a value of ECN information of uplink data and/or a value of ECN information of downlink data are or is the second value;
               a data flow that conforms to the third data packet detection information and/or the fourth data packet detection information; and
               a data flow that conforms to the eighth data packet detection information;
                  and/or
               the seventh data flow is a data flow that meets at least one of the following:
                  a data flow of which the uplink supports the first ECN operation or the ECN operation for L4S and/or requires the first ECN operation or the ECN operation for L4S;
                  a data flow of which the downlink supports the first ECN operation or the ECN operation for L4S and/or requires the first ECN operation or the ECN operation for L4S;
                  a data flow for which a value of ECN information of uplink data is the first value or the second value;
                  a data flow for which a value of ECN information of downlink data is the first value or the second value; and
                  a data flow that conforms to at least one of the following: the first data packet detection information, the second data packet detection information, the third data packet detection information, the fourth data packet detection information, the fifth data packet detection information, the sixth data packet detection information, the seventh data packet detection information, the eighth data packet detection information, and the ninth data packet detection information.

Optionally, the first data flow further meets at least one of the following:
a data flow of which the downlink supports the first ECN operation and/or requires the first ECN operation;
a data flow for which a value of ECN information of downlink data is the second value or a data flow that conforms to the fourth data packet detection information; and
a data flow for which a value of ECN information of downlink data is the third value or a data flow that conforms to the sixth data packet detection information;
   and/or
the second data flow further meets at least one of the following:
   a data flow of which the uplink supports the first ECN operation and/or requires the first ECN operation;
   a data flow for which a value of ECN information of uplink data is the second value or a data flow that conforms to the third data packet detection information; and
   a data flow for which a value of ECN information of uplink data is the third value or a data flow that conforms to the fifth data packet detection information;
      and/or
   the fourth data flow further meets at least one of the following:
      a data flow of which the downlink supports the ECN operation for L4S and/or requires the ECN operation for L4S;
      a data flow for which a value of ECN information of downlink data is the first value or a data flow that conforms to the second data packet detection information; and
      a data flow for which a value of ECN information of downlink data is the third value or a data flow that conforms to the sixth data packet detection information;
         and/or
      the fifth data flow further meets at least one of the following:
         a data flow of which the uplink supports the ECN operation for L4S and/or requires the ECN operation for L4S;
         a data flow for which a value of ECN information of uplink data is the first value or a data flow that conforms to the first data packet detection information; and
         a data flow for which a value of ECN information of uplink data is the third value or a data flow that conforms to the fifth data packet detection information.

FIG. 13 is a schematic diagram 3 of a structure of an information processing apparatus according to an embodiment of this application. As shown in FIG. 13, the information processing apparatus includes:
a processing module 410, configured to: obtain data packet detection information, where the data packet detection information is used to detect a data flow that conforms to the data packet detection information; and
perform a third operation based on the data packet detection information, where the third operation includes:
   detecting or filtering a target data flow;
   reporting first information in a case that the target data flow is detected, where the first information is used to indicate that the target data flow starts; and
   reporting second information in a case that the target data flow is no longer detected, where the second information is used to indicate that the target data flow ends, where
   the target data flow is a data flow that conforms to the data packet detection information; and
   the data packet detection information includes at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information.

Optionally, the ECN information includes at least one of the following: first ECN information, second ECN information, and third ECN information;
the first ECN information is information used to indicate a first value;
the second ECN information is information used to indicate a second value; and
the third ECN information is information used to indicate a third value.

Optionally, the first data packet detection information is used to detect a data flow whose uplink data carries a first value;
and/or
the second data packet detection information is used to detect a data flow whose downlink data carries the first value;
   and/or
the third data packet detection information is used to detect a data flow whose uplink data carries a second value;
   and/or
the fourth data packet detection information is used to detect a data flow whose downlink data carries the second value;
   and/or
the fifth data packet detection information is used to detect a data flow whose uplink data carries a third value;
   and/or
the sixth data packet detection information is used to detect a data flow whose downlink data carries the third value;
   and/or
the seventh data packet detection information is used to detect a data flow whose uplink data and/or downlink data carry or carries the first value;
   and/or
the eighth data packet detection information is used to detect a data flow whose uplink data and/or downlink data carry or carries the second value;
   and/or
the ninth data packet detection information is used to detect a data flow whose uplink data and/or downlink data carry or carries the first value or the second value.

Optionally, the first data packet detection information includes one of the following: the first value, and the first value and first source interface information;
the second data packet detection information includes one of the following: the first value, and the first value and second source interface information;
the third data packet detection information includes one of the following: the second value, and the second value and the first source interface information;
the fourth data packet detection information includes one of the following: the second value, and the second value and the second source interface information;
the fifth data packet detection information includes one of the following: the third value, and the third value and the first source interface information;
the sixth data packet detection information includes one of the following: the third value, and the third value and the second source interface information;
the seventh data packet detection information includes the first value;
the seventh data packet detection information includes the second value; and
the eighth data packet detection information includes at least one of the following: the first value and the second value, where
the first source interface information is capable of being used to indicate that a data direction is the uplink; and
the second source interface information is capable of being used to indicate that the data direction is the downlink.

Optionally, the first data packet detection information or the fourth data packet detection information further includes ECN information used to detect downlink data;
and/or
the second data packet detection information or the fifth data packet detection information further includes ECN information used to detect uplink data,
where
a value of the ECN information used to detect downlink data includes one of the following: the second value, the second value, and the third value; or the value of the ECN information used to detect downlink data does not include a fourth value; and
a value of the ECN information used to detect uplink data includes any one of the following: the second value, the second value, and the third value; or the value of the ECN information used to detect uplink data does not include the fourth value.

Optionally, the first value is used to indicate that an ECN operation for L4S is supported and/or required;
the second value is used to indicate that a first ECN operation is supported and/or required;
the third value is used to indicate congestion experienced;
the fourth value is used to indicate that explicit congestion notification is not supported; and
the first ECN operation does not include the ECN operation for L4S.

Optionally, a representation form of the first value is one of the following: 10, 2, and ECT(1);
a representation form of the second value is one of the following: 01, 1, and ECT(0);
a representation form of the third value is one of the following: 11, 3, and congestion experienced CE; and
a representation form of the fourth value is one of the following: 00, 0, and no ECN.

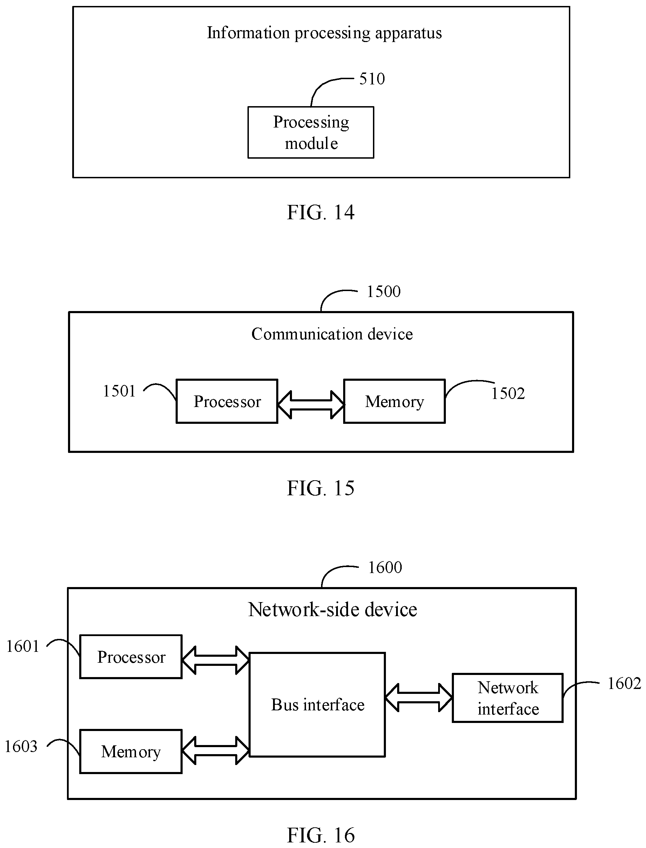

FIG. 14 is a schematic diagram 4 of a structure of an information processing apparatus according to an embodiment of this application. As shown in FIG. 14, the information processing apparatus includes:
a processing module 510, configured to perform a fourth operation, where the performing a fourth operation includes at least one of the following:
performing a congestion monitoring and/or congestion reporting operation on an uplink;
performing the congestion monitoring and/or congestion reporting operation on a downlink; and
performing the congestion monitoring and/or congestion reporting operation on the uplink and the downlink.

Optionally, the performing a congestion monitoring and/or congestion reporting operation on an uplink includes one of the following: performing an ECN operation for L4S on the uplink, and performing a first ECN operation on the uplink;
the performing the congestion monitoring and/or congestion reporting operation on a downlink includes one of the following: performing the ECN operation for L4S on the downlink, and performing the first ECN operation on the downlink; and
the performing the congestion monitoring and/or congestion reporting operation on the uplink and the downlink includes one of the following: performing the ECN operation for L4S on the uplink and the downlink, and performing the first ECN operation on the uplink and the downlink.

Optionally, the performing a congestion monitoring and/or congestion reporting operation on an uplink includes at least one of the following:
when congestion occurs on the uplink, enabling an uplink data packet to carry information indicating that congestion occurs, or enabling an uplink data packet to carry information indicating that congestion occurs on the uplink; and
sending the uplink data packet;
   and/or
the performing an ECN operation for L4S on the uplink includes at least one of the following:
   when congestion corresponding to L4S occurs on the uplink, enabling an uplink data packet to carry information indicating that congestion occurs, or enabling an uplink data packet to carry information indicating that congestion occurs on the uplink; and
   sending the uplink data packet;
   and/or the performing the congestion monitoring and/or congestion reporting operation on a downlink includes at least one of the following:
      when congestion occurs on the downlink, enabling a downlink data packet to carry information indicating that congestion occurs, or enabling an uplink data packet to carry information indicating that congestion occurs on the downlink; and
      sending the data packet;
         and/or
      the performing the ECN operation for L4S on the downlink includes at least one of the following:
         when congestion corresponding to L4S occurs on the downlink, enabling a downlink data packet to carry information indicating that congestion occurs, or enabling an uplink data packet to carry information indicating that congestion occurs on the downlink; and
         sending the data packet;
            and/or
         the performing the ECN operation for L4S on the uplink and the downlink includes the performing an ECN operation for L4S on the uplink and/or the performing the ECN operation for L4S on the downlink;
            and/or
         the performing a first ECN operation on the uplink includes at least one of the following:
            when congestion corresponding to ECN occurs on the uplink, enabling an uplink data packet to carry information indicating that congestion occurs, or enabling an uplink data packet to carry information indicating that congestion occurs on the uplink; and
            sending the uplink data packet;
               and/or
            the performing the first ECN operation on the downlink includes at least one of the following:
               when congestion corresponding to ECN occurs on the downlink, enabling a downlink data packet to carry information indicating that congestion occurs, or enabling an uplink data packet to carry information indicating that congestion occurs on the downlink; and
               sending the data packet;
               the performing the first ECN operation on the uplink and the downlink includes the performing a first ECN operation on the uplink and/or the performing the first ECN operation on the downlink.

Optionally, the performing a congestion monitoring and/or congestion reporting operation on an uplink, the performing a first ECN operation on the uplink, or the performing an ECN operation for L4S on the uplink includes at least one of the following:
enabling, on the basis that an uplink data packet carries information indicating that congestion occurs on the uplink, the uplink data packet to carry information indicating that congestion occurs; and
sending the uplink data packet;
   and/or
the performing the congestion monitoring and/or congestion reporting operation on the downlink, the performing the first ECN operation on the downlink, or the performing the ECN operation for L4S on the downlink includes at least one of the following:
   enabling, on the basis that an uplink data packet carries information indicating that congestion occurs on the downlink, a downlink data packet to carry information indicating that congestion occurs; and
   sending the downlink data packet.

Optionally, in a case that a first condition is met, the ECN operation for L4S is performed on the uplink, or the congestion monitoring and/or congestion reporting operation is performed on the uplink; and
the first condition includes at least one of the following:
a value of ECN information of received uplink data of a first object is a first value;
a value of ECN information of received downlink data of the first object does not include a fourth value, or the value of the ECN information of the received downlink data of the first object is one of the following: the first value, a second value, and a third value;
congestion corresponding to L4S occurs on an uplink of the first object; and
a first requirement, a third requirement, or a seventh requirement corresponding to the first object is obtained,
where
the first requirement is used to require one of the following: performing the ECN operation for L4S on the uplink, and performing the congestion monitoring and/or congestion reporting operation on the uplink;
the third requirement is used to require one of the following: performing the ECN operation for L4S on the uplink and/or the downlink, and performing the congestion monitoring and/or congestion reporting operation on the uplink and/or the downlink;
the seventh requirement is used to require at least one of the following: performing the first ECN operation and/or the ECN operation for L4S on the uplink and/or the downlink, and performing the congestion monitoring and/or congestion reporting operation on the uplink and/or the downlink; and
the first object is one of the following: a first QoS flow, a radio bearer to which the first QoS flow is mapped, a logical channel to which the first QoS flow is mapped, and a terminal.

Optionally, in a case that a second condition is met, the ECN operation for L4S is performed on the downlink, or the congestion monitoring and/or congestion reporting operation is performed on the downlink; and
the second condition includes at least one of the following:
a value of ECN information of received downlink data of a first object is a first value;
a value of ECN information of received uplink data of the first object does not include a fourth value, or the value of the ECN information of the received uplink data of the first object is one of the following: the first value, a second value, and a third value;
congestion corresponding to L4S occurs on a downlink of the first object; and
a second requirement, a third requirement, or a seventh requirement corresponding to the first object is obtained,
where
the second requirement is used to require one of the following: performing the ECN operation for L4S on the downlink, and performing the congestion monitoring and/or congestion reporting operation on the downlink;
the third requirement is used to require one of the following: performing the ECN operation for L4S on the uplink and/or the downlink, and performing the congestion monitoring and/or congestion reporting operation on the uplink and/or the downlink;
the seventh requirement is used to require at least one of the following: performing the first ECN operation and/or the ECN operation for L4S on the uplink and/or the downlink, and performing the congestion monitoring and/or congestion reporting operation on the uplink and/or the downlink; and
the first object is one of the following: a first QoS flow, a radio bearer to which the first QoS flow is mapped, a logical channel to which the first QoS flow is mapped, and a terminal.

Optionally, in a case that a third condition is met, the first ECN operation is performed on the uplink, or the congestion monitoring and/or congestion reporting operation is performed on the uplink; and
the third condition includes at least one of the following:
a value of ECN information of received uplink data of a first object is a second value;
a value of ECN information of received downlink data of the first object does not include a fourth value, or the value of the ECN information of the received downlink data of the first object is one of the following: a first value, the second value, and a third value;
congestion corresponding to ECN occurs on an uplink of the first object; and
a fourth requirement, a sixth requirement, or a seventh requirement corresponding to the first object is obtained,
where
the fourth requirement is used to require one of the following: performing the first ECN operation on the uplink, and performing the congestion monitoring and/or congestion reporting operation on the uplink;
the sixth requirement is used to require one of the following: performing the first ECN operation on the uplink and/or the downlink, and performing the congestion monitoring and/or congestion reporting operation on the uplink and/or the downlink;
the seventh requirement is used to require at least one of the following: performing the first ECN operation and/or the ECN operation for L4S on the uplink and/or the downlink, and performing the congestion monitoring and/or congestion reporting operation on the uplink and/or the downlink; and
the first object is one of the following: a first QoS flow, a radio bearer to which the first QoS flow is mapped, a logical channel to which the first QoS flow is mapped, and a terminal.

Optionally, in a case that a fourth condition is met, the first ECN operation is performed on the downlink, or the congestion monitoring and/or congestion reporting operation is performed on the downlink; and
the fourth condition includes at least one of the following:
a value of ECN information of received downlink data of a first object is a second value;
a value of ECN information of received uplink data of the first object does not include a fourth value, or the value of the ECN information of the received uplink data of the first object is one of the following: a first value, the second value, and a third value;
congestion corresponding to ECN occurs on a downlink of the first object; and
a fifth requirement, a sixth requirement, or a seventh requirement corresponding to the first object is obtained,
where
the fifth requirement is used to require one of the following: performing the first ECN operation on the downlink, and performing the congestion monitoring and/or congestion reporting operation on the downlink;
the sixth requirement is used to require one of the following: performing the first ECN operation on the uplink and/or the downlink, and performing the congestion monitoring and/or congestion reporting operation on the uplink and/or the downlink;
the seventh requirement is used to require at least one of the following: performing the first ECN operation and/or the ECN operation for L4S on the uplink and/or the downlink, and performing the congestion monitoring and/or congestion reporting operation on the uplink and/or the downlink; and
the first object is one of the following: a first QoS flow, a radio bearer to which the first QoS flow is mapped, a logical channel to which the first QoS flow is mapped, and a terminal.

Optionally, the information processing apparatus further includes:
an obtaining module, configured to obtain third information, where the third information includes at least one of the following: an N^{th} requirement corresponding to a second object and data packet detection information; and
the processing module 410 is further configured to perform the fourth operation based on the third information, where
the data packet detection information includes at least one of the following: ECN information, first data packet detection information, second data packet detection information, third data packet detection information, fourth data packet detection information, fifth data packet detection information, and sixth data packet detection information;
a value of N is one of the following: 1, 2, 3, 4, 5, 6, and 7;
the N^{th} requirement corresponding to the second object is used to require the N^{th} requirement to be performed on the second object; and
the second object includes one of the following: the first QoS flow and the terminal.

Optionally, a representation form of the N^{th} requirement includes one of the following: explicit N^{th} indication information and an N^{th} QoS identifier;
and/or
the third requirement may be represented by using explicit first indication information or second indication information;
   and/or
the sixth requirement may be represented by using explicit fourth indication information or fifth indication information,
where
the value of N is one of the following: 1, 2, 3, 4, 5, 6, and 7;
the N^{th} indication information is used to indicate the N^{th} requirement; and
the N^{th} QoS identifier is used to indicate the N^{th} requirement.

Optionally, a value of the ECN information includes at least one of the following:
the first value, where the first value is used to indicate that the ECN operation for L4S is supported and/or required;
the second value, where the second value is used to indicate that the first ECN operation is supported and/or required;
the third value, where the third value is used to indicate congestion experienced; and
the fourth value, where the fourth value is used to indicate that explicit congestion notification is not supported,
where
the first ECN operation does not include the ECN operation for L4S;
the first ECN operation is classic ECN; and
the first ECN operation does not include L4S or the ECN operation for L4S.

Optionally, a representation form of the first value is one of the following: 10, 2, and ECT(1);
a representation form of the second value is one of the following: 01, 1, and ECT(0);
a representation form of the third value is one of the following: 11, 3, and congestion experienced CE; and
a representation form of the fourth value is one of the following: 00, 0, and no ECN.

Optionally, the first data packet detection information is used to detect a data flow whose uplink data carries the first value;
and/or
the second data packet detection information is used to detect a data flow whose downlink data carries the first value;
   and/or
the third data packet detection information is used to detect a data flow whose uplink data carries the second value;
   and/or
the fourth data packet detection information is used to detect a data flow whose downlink data carries the second value;
   and/or
the fifth data packet detection information is used to detect a data flow whose uplink data carries the third value;
   and/or
the sixth data packet detection information is used to detect a data flow whose downlink data carries the third value;
   and/or
the seventh data packet detection information is used to detect a data flow whose uplink data and/or downlink data carry or carries the first value;
   and/or
the eighth data packet detection information is used to detect a data flow whose uplink data and/or downlink data carry or carries the second value;
   and/or
the ninth data packet detection information is used to detect a data flow whose uplink data and/or downlink data carry or carries the first value or the second value.

Optionally, the first data packet detection information includes one of the following: the first value, and the first value and first source interface information;
the second data packet detection information includes one of the following: the first value, and the first value and second source interface information;
the third data packet detection information includes one of the following: the second value, and the second value and the first source interface information;
the fourth data packet detection information includes one of the following: the second value, and the second value and the second source interface information;
the fifth data packet detection information includes one of the following: the third value, and the third value and the first source interface information;
the sixth data packet detection information includes one of the following: the third value, and the third value and the second source interface information;
the seventh data packet detection information includes the first value;
the seventh data packet detection information includes the second value; and
the eighth data packet detection information includes at least one of the following: the first value and the second value, where
the first source interface information is capable of being used to indicate that a data direction is the uplink; and
the second source interface information is capable of being used to indicate that the data direction is the downlink.

Optionally, the first data packet detection information or the fourth data packet detection information further includes ECN information used to detect downlink data;
and/or
the second data packet detection information or the fifth data packet detection information further includes ECN information used to detect uplink data,
where
a value of the ECN information used to detect downlink data includes one of the following: the second value, the second value, and the third value; or the value of the ECN information used to detect downlink data does not include a fourth value; and
a value of the ECN information used to detect uplink data includes any one of the following: the second value, the second value, and the third value; or the value of the ECN information used to detect uplink data does not include the fourth value.

In this embodiment of this application, data packet detection information including ECN information is determined, so that it can be monitored whether a target data flow starts. A corresponding congestion monitoring and/or congestion reporting requirement is set for a starting target data flow, and classification-based QoS flow mapping is implemented, so that uniform congestion monitoring is used for QoS flows, for example, only uplink congestion occurrence is monitored, only downlink congestion occurrence is monitored, or it is monitored whether congestion occurs on an uplink and a downlink, thereby better supporting, in a mobile cellular network segment, a technology corresponding to congestion marking.

The information processing apparatus in this embodiment of this application may be an electronic device, for example, an electronic device with an operating system, or may be a component in an electronic device, for example, an integrated circuit or a chip. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The information processing apparatus provided in this embodiment of this application can implement the processes implemented in the method embodiments of FIG. 2 to FIG. 10, and achieve the same technical effects. To avoid repetition, details are not described herein again.

Optionally, as shown in FIG. 15, an embodiment of this application further provides a communication device 1500, including a processor 1501 and a memory 1502. The memory 1502 stores a program or instructions capable of running on the processor 1501. For example, when the communication device 1500 is a terminal, the program or the instructions are executed by the processor 1501 to implement the steps of the foregoing information processing method embodiments, and the same technical effects can be achieved. When the communication device 1500 is a network-side device, the program or the instructions are executed by the processor 1501 to implement the steps of the foregoing information processing method embodiments, and the same technical effects can be achieved. To avoid repetition, details are not described herein again.

An embodiment of this application further provides a first communication device, including a processor and a communication interface. The processor is configured to perform a first operation. The first operation includes at least one of the following: determining data packet detection information, where the data packet detection information includes at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information; sending the data packet detection information; mapping a plurality of data flows to a same QoS flow; mapping a data flow 1 and a data flow 2 to different QoS flows; configuring an N^{th} requirement for a QoS flow; and sending the N^{th} requirement corresponding to the QoS flow. A value of N is one of the following: 1, 2, 3, 4, 5, and 6. A first requirement is used to require one of the following: performing an ECN operation for L4S on an uplink, and performing a congestion monitoring and/or congestion reporting operation on the uplink; a second requirement is used to require one of the following: performing the ECN operation for L4S on a downlink, and performing the congestion monitoring and/or congestion reporting operation on the downlink; a third requirement is used to require one of the following: performing the ECN operation for L4S on the uplink and/or the downlink, and performing the congestion monitoring and/or congestion reporting operation on the uplink and/or the downlink; a fourth requirement is used to require one of the following: performing a first ECN operation on the uplink, and performing the congestion monitoring and/or congestion reporting operation on the uplink; a fifth requirement is used to require one of the following: performing the first ECN operation on the downlink, and performing the congestion monitoring and/or congestion reporting operation on the downlink; a sixth requirement is used to require one of the following: performing the first ECN operation on the uplink and/or the downlink, and performing the congestion monitoring and/or congestion reporting operation on the uplink and/or the downlink; and a seventh requirement is used to require at least one of the following: performing the first ECN operation and/or the ECN operation for L4S on the uplink and/or the downlink, and performing the congestion monitoring and/or congestion reporting operation on the uplink and/or the downlink. This embodiment of the first communication device corresponds to the foregoing method embodiment of the first communication device. Each implementation process and implementation of the foregoing method embodiment may be applied to this embodiment of the first communication device, and the same technical effects can be achieved.

An embodiment of this application further provides a second communication device, including a processor and a communication interface. The processor is configured to perform a second operation. The second operation includes at least one of the following: determining policy control request trigger information, where the policy control request trigger information is used to require reporting to be performed in a case that a data flow that conforms to data packet detection information is detected; determining the data packet detection information, where the data packet detection information is used to detect a data flow that conforms to the data packet detection information; sending the data packet detection information; sending the policy control request trigger information; and configuring an N^{th} requirement for a data flow, where the data packet detection information includes at least one of the following: ECN information, first data packet detection information, second data packet detection information, third data packet detection information, fourth data packet detection information, fifth data packet detection information, sixth data packet detection information, seventh data packet detection information, eighth data packet detection information, and ninth data packet detection information; a value of N is one of the following: 1, 2, 3, 4, 5, and 6; a first requirement is used to require one of the following: performing an ECN operation for L4S on an uplink, and performing a congestion monitoring and/or congestion reporting operation on the uplink; a second requirement is used to require one of the following: performing the ECN operation for L4S on a downlink, and performing the congestion monitoring and/or congestion reporting operation on the downlink; a third requirement is used to require one of the following: performing the ECN operation for L4S on the uplink and/or the downlink, and performing the congestion monitoring and/or congestion reporting operation on the uplink and/or the downlink; a fourth requirement is used to require one of the following: performing a first ECN operation on the uplink, and performing the congestion monitoring and/or congestion reporting operation on the uplink; a fifth requirement is used to require one of the following: performing the first ECN operation on the downlink, and performing the congestion monitoring and/or congestion reporting operation on the downlink; a sixth requirement is used to require one of the following: performing the first ECN operation on the uplink and/or the downlink, and performing the congestion monitoring and/or congestion reporting operation on the uplink and/or the downlink; and a seventh requirement is used to require at least one of the following: performing the first ECN operation and/or the ECN operation for L4S on the uplink and/or the downlink, and performing the congestion monitoring and/or congestion reporting operation on the uplink and/or the downlink. This embodiment of the second communication device corresponds to the foregoing method embodiment of the second communication device. Each implementation process and implementation of the foregoing method embodiment may be applied to this embodiment of the second communication device, and the same technical effects can be achieved.

An embodiment of this application further provides a third communication device, including a processor and a communication interface. The processor is configured to: obtain data packet detection information, where the data packet detection information is used to detect a data flow that conforms to the data packet detection information; and perform a third operation based on the data packet detection information. The third operation includes: detecting or filtering a target data flow; reporting first information in a case that the target data flow is detected, where the first information is used to indicate that the target data flow starts; and reporting second information in a case that the target data flow is no longer detected, where the second information is used to indicate that the target data flow ends. The target data flow is a data flow that conforms to the data packet detection information; and the data packet detection information includes at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information. This embodiment of the third communication device corresponds to the foregoing method embodiment of the third communication device. Each implementation process and implementation of the foregoing method embodiment may be applied to this embodiment of the third communication device, and the same technical effects can be achieved.

An embodiment of this application further provides a fourth communication device, including a processor and a communication interface. The processor is configured to perform a fourth operation, where the performing a fourth operation includes at least one of the following: performing a congestion monitoring and/or congestion reporting operation on an uplink; performing the congestion monitoring and/or congestion reporting operation on a downlink; and performing the congestion monitoring and/or congestion reporting operation on the uplink and the downlink. This embodiment of the fourth communication device corresponds to the foregoing method embodiment of the fourth communication device. Each implementation process and implementation of the foregoing method embodiment may be applied to this embodiment of the fourth communication device, and the same technical effects can be achieved.

Specifically, an embodiment of this application further provides a network-side device. As shown in FIG. 16, the network-side device 1600 includes a processor 1601, a network interface 1602, and a memory 1603. The network interface 1602 is, for example, a common public radio interface (common public radio interface, CPRI).

Specifically, the network-side device 1600 in this embodiment of this application further includes instructions or a program that is stored in the memory 1603 and that is capable of running on the processor 1601. The processor 1601 invokes the instructions or the program in the memory 1603 to perform the method performed by the modules shown in FIG. 11 to FIG. 14, and the same technical effects are achieved. To avoid repetition, details are not described herein again.

An embodiment of this application further provides a readable storage medium. The readable storage medium stores a program or instructions. When the program or instructions are executed by a processor, the processes in the foregoing information processing method embodiment are implemented, and the same technical effects can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions, to implement the processes in the foregoing information processing method embodiment, and the same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing information processing method embodiment, and the same technical effects can be achieved. To avoid repetition, details are not described herein again.

An embodiment of this application further provides a communication system, including a terminal and a network-side device. The terminal may be configured to perform the steps of the information processing method described above, and the network-side device may be configured to perform the steps of the information processing method described above.

It should be noted that in this specification, the terms "comprise", "include", or any variant thereof are intended to cover a non-exclusive inclusion, so that a process, a method, an article, or an apparatus that includes a series of elements not only includes those elements but also includes other elements that are not expressly listed, or further includes elements inherent to such a process, method, article, or apparatus. Without more constraints, an element preceded by "includes a ..." does not preclude the existence of additional identical elements in the process, method, article, or apparatus that includes the element. In addition, it should be noted that, the scope of the method and apparatus in the implementations of this application is not limited to performing functions in a sequence shown or discussed, and may further include performing functions in a basically simultaneous manner or in reverse order based on the functions involved. For example, the described method may be performed in an order different from the order described, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by software and a necessary general-purpose hardware platform, or certainly may be implemented by hardware. However, in many cases, the former is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in embodiments of this application.

The foregoing describes embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. An information processing method, comprising:
performing, by a first communication device, a first operation, wherein the first operation comprises at least one of the following:
determining data packet detection information, wherein the data packet detection information comprises at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information;
sending the data packet detection information;
mapping a plurality of data flows to a same QoS flow;
mapping a data flow 1 and a data flow 2 to different QoS flows;
configuring an N^{th} requirement for a QoS flow; and
sending the N^{th} requirement corresponding to the QoS flow, wherein
a value of N is one of the following: 1, 2, 3, 4, 5, 6, and 7;
the first requirement is used to require one of the following: performing an ECN operation for L4S on an uplink, and performing a congestion monitoring and/or congestion reporting operation on the uplink;
the second requirement is used to require one of the following: performing the ECN operation for L4S on a downlink, and performing the congestion monitoring and/or congestion reporting operation on the downlink;
the third requirement is used to require one of the following: performing the ECN operation for L4S on the uplink and/or the downlink, and performing the congestion monitoring and/or congestion reporting operation on the uplink and/or the downlink;
the fourth requirement is used to require one of the following: performing a first ECN operation on the uplink, and performing the congestion monitoring and/or congestion reporting operation on the uplink;
the fifth requirement is used to require one of the following: performing the first ECN operation on the downlink, and performing the congestion monitoring and/or congestion reporting operation on the downlink;
the sixth requirement is used to require one of the following: performing the first ECN operation on the uplink and/or the downlink, and performing the congestion monitoring and/or congestion reporting operation on the uplink and/or the downlink; and
the seventh requirement is used to require at least one of the following: performing the first ECN operation and/or the ECN operation for L4S on the uplink and/or the downlink, and performing the congestion monitoring and/or congestion reporting operation on the uplink and/or the downlink.

2. The method according to claim 1, wherein the ECN information comprises at least one of the following: first ECN information, second ECN information, and third ECN information;
the first ECN information is information used to indicate a first value;
the second ECN information is information used to indicate a second value; and
the third ECN information is information used to indicate a third value.

3. The method according to claim 1, wherein the mapping a plurality of data flows to a same QoS flow comprises:
mapping the plurality of data flows to the same QoS flow in a case that a seventh condition is met, wherein the seventh condition comprises one of the following:
each of the plurality of data flows is a first data flow;
each of the plurality of data flows is a second data flow;
each of the plurality of data flows is a third data flow;
a data flow in the plurality of data flows is one of the following: the first data flow, the second data flow, and the third data flow;
each of the plurality of data flows is a fourth data flow;
each of the plurality of data flows is a fifth data flow;
each of the plurality of data flows is a sixth data flow;
each of the plurality of data flows is a seventh data flow;
a data flow in the plurality of data flows is one of the following: the fourth data flow, the fifth data flow, and the sixth data flow; and
a data flow in the plurality of data flows is one of the following: the first data flow, the second data flow, the third data flow, the fourth data flow, the fifth data flow, and the sixth data flow.

4. The method according to claim 1, wherein the mapping a data flow 1 and a data flow 2 to different QoS flows comprises:
mapping the data flow 1 and the data flow 2 to the different QoS flows in a case that an eighth condition is met, wherein the eighth condition comprises one of the following:
the data flow 1 is an N^{th} data flow, and the data flow 2 is not the N^{th} data flow;
the data flow 1 is an N1^{th} data flow, the data flow 2 is an N2^{th} data flow, and N1 and N2 are different; and
the data flow 1 is a data flow of which the uplink and/or downlink requires the ECN operation for L4S, and the data flow 2 is a data flow of which the uplink and/or downlink requires the first ECN operation, wherein
a value of N, N1, or N2 is one of the following: 1, 2, 3, 4, 5, 6, and 7.

5. The method according to claim 1, wherein the configuring an N^{th} requirement for a QoS flow comprises at least one of the following:
configuring the N^{th} requirement for the QoS flow in a case that a ninth condition is met, wherein
the ninth condition comprises at least one of the following:
a data flow mapped to the QoS flow is an N^{th} data flow;
a QoS identifier of the data flow mapped to the QoS flow is an N^{th} QoS identifier; and
the data flow mapped to the target QoS flow has the N^{th} requirement; and
obtaining information used to indicate that the N^{th} data flow starts, wherein
the value of N is one of the following: 1, 2, 3, 4, 5, 6, and 7.

6. The method according to claim 3, 4, or 5, wherein the first data flow is a data flow that meets at least one of the following:
a data flow of which the uplink supports the ECN operation for L4S and/or requires the ECN operation for L4S, a data flow for which a value of ECN information of uplink data is a first value, or a data flow that conforms to the first data packet detection information;
a data flow of which the downlink does not support the ECN operation for L4S and/or does not require the ECN operation for L4S, a data flow for which a value of ECN information of downlink data does not comprise the first value, or a data flow that does not conform to the second data packet detection information;
a data flow for which a first QoS identifier is configured; and
a data flow for which the first requirement is configured;
and/or
the second data flow is a data flow that meets at least one of the following:
a data flow of which the uplink does not support the ECN operation for L4S and/or does not require the ECN operation for L4S, a data flow for which a value of ECN information of uplink data does not comprise the first value, or a data flow that does not conform to the first data packet detection information;
a data flow of which the downlink supports the ECN operation for L4S and/or requires the ECN operation for L4S, a data flow for which a value of ECN information of downlink data comprises the first value, or a data flow that conforms to the second data packet detection information;
a data flow for which a second QoS identifier is configured; and
a data flow for which the second requirement is configured;
and/or
the third data flow is a data flow that meets at least one of the following:
a data flow of which the uplink and/or downlink supports the ECN operation for L4S and/or require/requires the ECN operation for L4S;
a data flow for which a value of ECN information of uplink data and/or a value of ECN information of downlink data are or is the first value;
a data flow that conforms to the first data packet detection information and/or the second data packet detection information;
a data flow that conforms to the seventh data packet detection information;
a data flow for which a third QoS identifier is configured; and
a data flow for which the third requirement is configured;
and/or
the fourth data flow is a data flow that meets at least one of the following:
a data flow of which the uplink supports the first ECN operation and/or requires the first ECN operation, a data flow for which a value of ECN information of uplink data is a second value, or a data flow that conforms to the third data packet detection information;
a data flow of which the downlink does not support the first ECN operation and/or does not require the first ECN operation, a data flow for which a value of ECN information of downlink data does not comprise the second value, or a data flow that does not conform to the fourth data packet detection information;
a data flow for which a fourth QoS identifier is configured; and
a data flow for which the fourth requirement is configured;
and/or
the fifth data flow is a data flow that meets at least one of the following:
a data flow of which the uplink does not support the first ECN operation and/or does not require the first ECN operation, a data flow for which a value of ECN information of uplink data does not comprise the second value, or a data flow that does not conform to the third data packet detection information;
a data flow of which the downlink supports the first ECN operation and/or requires the first ECN operation, a data flow for which a value of ECN information of downlink data is the second value, or a data flow that conforms to the fourth data packet detection information;
a data flow for which a fifth QoS identifier is configured; and
a data flow for which the fifth requirement is configured;
and/or
the sixth data flow is a data flow that meets at least one of the following:
a data flow of which the uplink and/or downlink supports the first ECN operation and/or requires the first ECN operation;
a data flow for which a value of ECN information of uplink data and/or a value of ECN information of downlink data are or is the second value;
a data flow that conforms to the third data packet detection information and/or the fourth data packet detection information;
a data flow that conforms to the eighth data packet detection information;
a data flow for which a sixth QoS identifier is configured; and
a data flow for which the sixth requirement is configured;
and/or
the seventh data flow is a data flow that meets at least one of the following:
a data flow of which the uplink supports the first ECN operation or the ECN operation for L4S and/or requires the first ECN operation or the ECN operation for L4S;
a data flow of which the downlink supports the first ECN operation or the ECN operation for L4S and/or requires the first ECN operation or the ECN operation for L4S;
a data flow for which a value of ECN information of uplink data is the first value or the second value;
a data flow for which a value of ECN information of downlink data is the first value or the second value;
a data flow that conforms to at least one of the following: the first data packet detection information, the second data packet detection information, the third data packet detection information, the fourth data packet detection information, the fifth data packet detection information, the sixth data packet detection information, the seventh data packet detection information, the eighth data packet detection information, and the ninth data packet detection information;
a data flow for which a seventh QoS identifier is configured; and
a data flow for which the seventh requirement is configured.

7. The method according to claim 6, wherein
the first data flow further meets at least one of the following:
a data flow of which the downlink supports the first ECN operation and/or requires the first ECN operation;
a data flow for which a value of ECN information of downlink data is the second value or a data flow that conforms to the fourth data packet detection information; and
a data flow for which a value of ECN information of downlink data is a third value or a data flow that conforms to the sixth data packet detection information;
and/or
the second data flow further meets at least one of the following:
a data flow of which the uplink supports the first ECN operation and/or requires the first ECN operation;
a data flow for which a value of ECN information of uplink data is the second value or a data flow that conforms to the third data packet detection information; and
a data flow for which a value of ECN information of uplink data is the third value or a data flow that conforms to the fifth data packet detection information;
and/or
the fourth data flow further meets at least one of the following:
a data flow of which the downlink supports the ECN operation for L4S and/or requires the ECN operation for L4S;
a data flow for which a value of ECN information of downlink data is the first value or a data flow that conforms to the second data packet detection information; and
a data flow for which a value of ECN information of downlink data is the third value or a data flow that conforms to the sixth data packet detection information;
and/or
the fifth data flow further meets at least one of the following:
a data flow of which the uplink supports the ECN operation for L4S and/or requires the ECN operation for L4S;
a data flow for which a value of ECN information of uplink data is the first value or a data flow that conforms to the first data packet detection information; and
a data flow for which a value of ECN information of uplink data is the third value or a data flow that conforms to the fifth data packet detection information.

8. The method according to any one of claims 1 to 3, after the mapping a plurality of data flows to a same QoS flow, further comprising:
sending, by the first communication device, the N^{th} requirement corresponding to the QoS flow, wherein
the value of N is one of the following: 1, 2, 3, 4, 5, 6, and 7.

9. The method according to any one of claims 1 to 3, wherein the performing, by a first communication device, a first operation comprises:
obtaining, by the first communication device, policy control request trigger information and/or the data packet detection information, wherein the policy control request trigger information is used to require reporting to be performed in a case that a data flow that conforms to the data packet detection information is detected, and the data packet detection information is used to detect a data flow that conforms to the data packet detection information; and
performing, by the first communication device, the first operation based on the policy control request trigger information and/or the data packet detection information.

10. The method according to any one of claims 1 to 3, wherein the method further comprises:
obtaining, by the first communication device, first information, wherein the first information is used to indicate that transmission of a data flow that conforms to the data packet detection information starts; and
performing the first operation based on the first information.

11. The method according to any one of claims 1 to 7, wherein
a representation form of the N^{th} requirement comprises one of the following: explicit N^{th} indication information and the N^{th} QoS identifier;
and/or
the third requirement may be represented by using explicit first indication information or second indication information;
and/or
the sixth requirement may be represented by using explicit fourth indication information or fifth indication information,
wherein
the value of N is one of the following: 1, 2, 3, 4, 5, 6, and 7;
the N^{th} indication information is used to indicate the N^{th} requirement; and
the N^{th} QoS identifier is used to indicate the N^{th} requirement.

12. The method according to claim 1, wherein
the first data packet detection information is used to detect a data flow whose uplink data carries a first value;
and/or
the second data packet detection information is used to detect a data flow whose downlink data carries the first value;
and/or
the third data packet detection information is used to detect a data flow whose uplink data carries a second value;
and/or
the fourth data packet detection information is used to detect a data flow whose downlink data carries the second value;
and/or
the fifth data packet detection information is used to detect a data flow whose uplink data carries a third value;
and/or
the sixth data packet detection information is used to detect a data flow whose downlink data carries the third value;
and/or
the seventh data packet detection information is used to detect a data flow whose uplink data and/or downlink data carry or carries the first value;
and/or
the eighth data packet detection information is used to detect a data flow whose uplink data and/or downlink data carry or carries the second value;
and/or
the ninth data packet detection information is used to detect a data flow whose uplink data and/or downlink data carry or carries the first value or the second value.

13. The method according to claim 1 or 12, wherein
the first data packet detection information comprises one of the following: the first value, and the first value and first source interface information;
the second data packet detection information comprises one of the following: the first value, and the first value and second source interface information;
the third data packet detection information comprises one of the following: the second value, and the second value and the first source interface information;
the fourth data packet detection information comprises one of the following: the second value, and the second value and the second source interface information;
the fifth data packet detection information comprises one of the following: the third value, and the third value and the first source interface information;
the sixth data packet detection information comprises one of the following: the third value, and the third value and the second source interface information;
the seventh data packet detection information comprises the first value;
the seventh data packet detection information comprises the second value; and
the eighth data packet detection information comprises at least one of the following: the first value and the second value,
wherein
the first source interface information is capable of being used to indicate that a data direction is the uplink; and
the second source interface information is capable of being used to indicate that the data direction is the downlink.

14. The method according to any one of claims 2 to 13, wherein
a representation form of the first value is one of the following: 10, 2, and ECT(1);
a representation form of the second value is one of the following: 01, 1, and ECT(0); and
a representation form of the third value is one of the following: 11, 3, and congestion experienced CE.

15. An information processing method, comprising:
performing, by a second communication device, a second operation, wherein the second operation comprises at least one of the following:
determining policy control request trigger information, wherein the policy control request trigger information is used to require reporting to be performed in a case that a data flow that conforms to data packet detection information is detected;
determining the data packet detection information, wherein the data packet detection information is used to detect a data flow that conforms to the data packet detection information;
sending the data packet detection information;
sending the policy control request trigger information; and
configuring an N^{th} requirement for a data flow, wherein
the data packet detection information comprises at least one of the following: ECN information, first data packet detection information, second data packet detection information, third data packet detection information, fourth data packet detection information, fifth data packet detection information, sixth data packet detection information, seventh data packet detection information, eighth data packet detection information, and ninth data packet detection information;
a value of N is one of the following: 1, 2, 3, 4, 5, 6, and 7;
the first requirement is used to require one of the following: performing an ECN operation for L4S on an uplink, and performing a congestion monitoring and/or congestion reporting operation on the uplink;
the second requirement is used to require one of the following: performing the ECN operation for L4S on a downlink, and performing the congestion monitoring and/or congestion reporting operation on the downlink;
the third requirement is used to require one of the following: performing the ECN operation for L4S on the uplink and/or the downlink, and performing the congestion monitoring and/or congestion reporting operation on the uplink and/or the downlink;
the fourth requirement is used to require one of the following: performing a first ECN operation on the uplink, and performing the congestion monitoring and/or congestion reporting operation on the uplink;
the fifth requirement is used to require one of the following: performing the first ECN operation on the downlink, and performing the congestion monitoring and/or congestion reporting operation on the downlink;
the sixth requirement is used to require one of the following: performing the first ECN operation on the uplink and/or the downlink, and performing the congestion monitoring and/or congestion reporting operation on the uplink and/or the downlink; and
the seventh requirement is used to require at least one of the following: performing the first ECN operation and/or the ECN operation for L4S on the uplink and/or the downlink, and performing the congestion monitoring and/or congestion reporting operation on the uplink and/or the downlink.

16. The method according to claim 15, wherein the configuring an N^{th} requirement for a data flow comprises:
sending, by the second communication device, a PCC rule to a first communication device, wherein the PCC rule comprises the N^{th} requirement corresponding to the data flow.

17. The method according to claim 15 or 16, wherein the ECN information comprises at least one of the following: first ECN information, second ECN information, and third ECN information;
the first ECN information is information used to indicate a first value;
the second ECN information is information used to indicate a second value; and
the third ECN information is information used to indicate a third value.

18. The method according to claim 15 or 16, wherein
the first data packet detection information is used to detect a data flow whose uplink data carries a first value;
and/or
the second data packet detection information is used to detect a data flow whose downlink data carries the first value;
and/or
the third data packet detection information is used to detect a data flow whose uplink data carries a second value;
and/or
the fourth data packet detection information is used to detect a data flow whose downlink data carries the second value;
and/or
the fifth data packet detection information is used to detect a data flow whose uplink data carries a third value;
and/or
the sixth data packet detection information is used to detect a data flow whose downlink data carries the third value;
and/or
the seventh data packet detection information is used to detect a data flow whose uplink data and/or downlink data carry or carries the first value;
and/or
the eighth data packet detection information is used to detect a data flow whose uplink data and/or downlink data carry or carries the second value;
and/or
the ninth data packet detection information is used to detect a data flow whose uplink data and/or downlink data carry or carries the first value or the second value.

19. The method according to any one of claims 15, 16, and 18, wherein
the first data packet detection information comprises one of the following: the first value, and the first value and first source interface information;
the second data packet detection information comprises one of the following: the first value, and the first value and second source interface information;
the third data packet detection information comprises one of the following: the second value, and the second value and the first source interface information;
the fourth data packet detection information comprises one of the following: the second value, and the second value and the second source interface information;
the fifth data packet detection information comprises one of the following: the third value, and the third value and the first source interface information;
the sixth data packet detection information comprises one of the following: the third value, and the third value and the second source interface information;
the seventh data packet detection information comprises the first value;
the seventh data packet detection information comprises the second value; and
the eighth data packet detection information comprises at least one of the following: the first value and the second value, wherein
the first source interface information is capable of being used to indicate that a data direction is the uplink; and
the second source interface information is capable of being used to indicate that the data direction is the downlink.

20. The method according to claim 19, wherein
the first data packet detection information or the fourth data packet detection information further comprises ECN information used to detect downlink data;
and/or
the second data packet detection information or the fifth data packet detection information further comprises ECN information used to detect uplink data, wherein
a value of the ECN information used to detect downlink data comprises one of the following: the second value, the second value, and the third value; or the value of the ECN information used to detect downlink data does not comprise a fourth value; and
a value of the ECN information used to detect uplink data comprises any one of the following: the second value, the second value, and the third value; or the value of the ECN information used to detect uplink data does not comprise the fourth value.

21. The method according to claim 15, wherein the configuring an N^{th} requirement for a data flow comprises:
configuring an N^{th} QoS identifier for the data flow, wherein
the first QoS identifier is a QoS identifier used to represent the first requirement;
the second QoS identifier is a QoS identifier used to represent the second requirement;
the third QoS identifier is a QoS identifier used to represent the third requirement;
the fourth QoS identifier is a QoS identifier used to represent the fourth requirement;
the fifth QoS identifier is a QoS identifier used to represent the fifth requirement;
the sixth QoS identifier is a QoS identifier used to represent the sixth requirement; and
the seventh QoS identifier is a QoS identifier used to represent the seventh requirement.

22. The method according to claim 15, wherein the configuring an N^{th} requirement for a data flow comprises: configuring the N^{th} requirement for the data flow in a case that a tenth condition is met, wherein
the tenth condition comprises at least one of the following:
the data flow is an N^{th} data flow; and
information used to indicate that the N^{th} data flow starts is obtained; and
the configuring a third requirement for a data flow comprises: configuring the third requirement for the data flow in the case that the tenth condition is met, wherein
the tenth condition comprises at least one of the following:
the data flow is one of the following: a first data flow, a second data flow, and a third data flow; and
information used to indicate that the first data flow starts is obtained.

23. The method according to claim 18 or 19, wherein
the first data flow is a data flow that meets at least one of the following:
a data flow of which the uplink supports the ECN operation for L4S and/or requires the ECN operation for L4S, a data flow for which a value of ECN information of uplink data is the first value, or a data flow that conforms to the first data packet detection information; and
a data flow of which the downlink does not support the ECN operation for L4S and/or does not require the ECN operation for L4S, a data flow for which a value of ECN information of downlink data does not comprise the first value, or a data flow that does not conform to the second data packet detection information;
and/or
the second data flow is a data flow that meets at least one of the following:
a data flow of which the uplink does not support the ECN operation for L4S and/or does not require the ECN operation for L4S, a data flow for which a value of ECN information of uplink data does not comprise the first value, or a data flow that does not conform to the first data packet detection information; and
a data flow of which the downlink supports the ECN operation for L4S and/or requires the ECN operation for L4S, a data flow for which a value of ECN information of downlink data comprises the first value, or a data flow that conforms to the second data packet detection information;
and/or
the third data flow is a data flow that meets at least one of the following:
a data flow of which the uplink and/or downlink supports the ECN operation for L4S and/or requires the ECN operation for L4S;
a data flow for which a value of ECN information of uplink data and/or a value of ECN information of downlink data are or is the first value;
a data flow that conforms to the first data packet detection information and/or the second data packet detection information; and
a data flow that conforms to the seventh data packet detection information;
and/or
the fourth data flow is a data flow that meets at least one of the following:
a data flow of which the uplink supports the first ECN operation and/or requires the first ECN operation, a data flow for which a value of ECN information of uplink data is the second value, or a data flow that conforms to the third data packet detection information; and
a data flow of which the downlink does not support the first ECN operation and/or does not require the first ECN operation, a data flow for which a value of ECN information of downlink data does not comprise the second value, or a data flow that does not conform to the fourth data packet detection information;
and/or
the fifth data flow is a data flow that meets at least one of the following:
a data flow of which the uplink does not support the first ECN operation and/or does not require the first ECN operation, a data flow for which a value of ECN information of uplink data does not comprise the second value, or a data flow that does not conform to the third data packet detection information; and
a data flow of which the downlink supports the first ECN operation and/or requires the first ECN operation, a data flow for which a value of ECN information of downlink data is the second value, or a data flow that conforms to the fourth data packet detection information;
and/or
the sixth data flow is a data flow that meets at least one of the following:
a data flow of which the uplink and/or downlink supports the first ECN operation and/or requires the first ECN operation;
a data flow for which a value of ECN information of uplink data and/or a value of ECN information of downlink data are or is the second value;
a data flow that conforms to the third data packet detection information and/or the fourth data packet detection information; and
a data flow that conforms to the eighth data packet detection information;
and/or
the seventh data flow is a data flow that meets at least one of the following:
a data flow of which the uplink supports the first ECN operation or the ECN operation for L4S and/or requires the first ECN operation or the ECN operation for L4S;
a data flow of which the downlink supports the first ECN operation or the ECN operation for L4S and/or requires the first ECN operation or the ECN operation for L4S;
a data flow for which a value of ECN information of uplink data is the first value or the second value;
a data flow for which a value of ECN information of downlink data is the first value or the second value; and
a data flow that conforms to at least one of the following: the first data packet detection information, the second data packet detection information, the third data packet detection information, the fourth data packet detection information, the fifth data packet detection information, the sixth data packet detection information, the seventh data packet detection information, the eighth data packet detection information, and the ninth data packet detection information.

24. The method according to claim 23, wherein
the first data flow further meets at least one of the following:
a data flow of which the downlink supports the first ECN operation and/or requires the first ECN operation;
a data flow for which a value of ECN information of downlink data is the second value or a data flow that conforms to the fourth data packet detection information; and
a data flow for which a value of ECN information of downlink data is the third value or a data flow that conforms to the sixth data packet detection information;
and/or
the second data flow further meets at least one of the following:
a data flow of which the uplink supports the first ECN operation and/or requires the first ECN operation;
a data flow for which a value of ECN information of uplink data is the second value or a data flow that conforms to the third data packet detection information; and
a data flow for which a value of ECN information of uplink data is the third value or a data flow that conforms to the fifth data packet detection information;
and/or
the fourth data flow further meets at least one of the following:
a data flow of which the downlink supports the ECN operation for L4S and/or requires the ECN operation for L4S;
a data flow for which a value of ECN information of downlink data is the first value or a data flow that conforms to the second data packet detection information; and
a data flow for which a value of ECN information of downlink data is the third value or a data flow that conforms to the sixth data packet detection information;
and/or
the fifth data flow further meets at least one of the following:
a data flow of which the uplink supports the ECN operation for L4S and/or requires the ECN operation for L4S;
a data flow for which a value of ECN information of uplink data is the first value or a data flow that conforms to the first data packet detection information; and
a data flow for which a value of ECN information of uplink data is the third value or a data flow that conforms to the fifth data packet detection information.

25. The method according to any one of claims 14 to 24, wherein a representation form of the N^{th} requirement comprises one of the following: explicit N^{th} indication information and the N^{th} QoS identifier.

26. The method according to any one of claims 14 to 25, wherein the second communication device comprises a policy control function PCF, and the first communication device comprises a session management function SMF.

27. An information processing method, comprising:
obtaining, by a third communication device, data packet detection information, wherein the data packet detection information is used to detect a data flow that conforms to the data packet detection information; and
performing a third operation based on the data packet detection information, wherein the third operation comprises at least one of the following:
detecting or filtering a target data flow;
reporting first information in a case that the target data flow is detected, wherein the first information is used to indicate that the target data flow starts; and
reporting second information in a case that the target data flow is no longer detected, wherein the second information is used to indicate that the target data flow ends, wherein
the target data flow is a data flow that conforms to the data packet detection information; and
the data packet detection information comprises at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information.

28. The method according to claim 27, wherein the ECN information comprises at least one of the following: first ECN information, second ECN information, and third ECN information;
the first ECN information is information used to indicate a first value;
the second ECN information is information used to indicate a second value; and
the third ECN information is information used to indicate a third value.

29. The method according to claim 27, wherein
the first data packet detection information is used to detect a data flow whose uplink data carries a first value;
and/or
the second data packet detection information is used to detect a data flow whose downlink data carries the first value;
and/or
the third data packet detection information is used to detect a data flow whose uplink data carries a second value;
and/or
the fourth data packet detection information is used to detect a data flow whose downlink data carries the second value;
and/or
the fifth data packet detection information is used to detect a data flow whose uplink data carries a third value;
and/or
the sixth data packet detection information is used to detect a data flow whose downlink data carries the third value;
and/or
the seventh data packet detection information is used to detect a data flow whose uplink data and/or downlink data carry or carries the first value;
and/or
the eighth data packet detection information is used to detect a data flow whose uplink data and/or downlink data carry or carries the second value;
and/or
the ninth data packet detection information is used to detect a data flow whose uplink data and/or downlink data carry or carries the first value or the second value.

30. The method according to claim 27 or 29, wherein
the first data packet detection information comprises one of the following: the first value, and the first value and first source interface information;
the second data packet detection information comprises one of the following: the first value, and the first value and second source interface information;
the third data packet detection information comprises one of the following: the second value, and the second value and the first source interface information;
the fourth data packet detection information comprises one of the following: the second value, and the second value and the second source interface information;
the fifth data packet detection information comprises one of the following: the third value, and the third value and the first source interface information;
the sixth data packet detection information comprises one of the following: the third value, and the third value and the second source interface information;
the seventh data packet detection information comprises the first value;
the seventh data packet detection information comprises the second value; and
the eighth data packet detection information comprises at least one of the following: the first value and the second value, wherein
the first source interface information is capable of being used to indicate that a data direction is the uplink; and
the second source interface information is capable of being used to indicate that the data direction is the downlink.

31. The method according to claim 30, wherein
the first data packet detection information or the fourth data packet detection information further comprises ECN information used to detect downlink data;
and/or
the second data packet detection information or the fifth data packet detection information further comprises ECN information used to detect uplink data,
wherein
a value of the ECN information used to detect downlink data comprises one of the following: the second value, the second value, and the third value; or the value of the ECN information used to detect downlink data does not comprise a fourth value; and
a value of the ECN information used to detect uplink data comprises any one of the following: the second value, the second value, and the third value; or the value of the ECN information used to detect uplink data does not comprise the fourth value.

32. The method according to claim 28 or 29, wherein
the first value is used to indicate that an ECN operation for L4S is supported and/or required;
the second value is used to indicate that a first ECN operation is supported and/or required;
the third value is used to indicate congestion experienced;
the fourth value is used to indicate that explicit congestion notification is not supported; and
the first ECN operation does not comprise the ECN operation for L4S.

33. The method according to claim 32, wherein
a representation form of the first value is one of the following: 10, 2, and ECT(1);
a representation form of the second value is one of the following: 01, 1, and ECT(0);
a representation form of the third value is one of the following: 11, 3, and congestion experienced CE; and
a representation form of the fourth value is one of the following: 00, 0, and no ECN.

34. An information processing method, comprising:
performing, by a fourth communication device, a fourth operation, wherein the performing a fourth operation comprises at least one of the following:
performing a congestion monitoring and/or congestion reporting operation on an uplink;
performing the congestion monitoring and/or congestion reporting operation on a downlink; and
performing the congestion monitoring and/or congestion reporting operation on the uplink and the downlink.

35. The method according to claim 34, wherein
the performing a congestion monitoring and/or congestion reporting operation on an uplink comprises one of the following: performing an ECN operation for L4S on the uplink, and performing a first ECN operation on the uplink;
the performing the congestion monitoring and/or congestion reporting operation on a downlink comprises one of the following: performing the ECN operation for L4S on the downlink, and performing the first ECN operation on the downlink; and
the performing the congestion monitoring and/or congestion reporting operation on the uplink and the downlink comprises one of the following: performing the ECN operation for L4S on the uplink and the downlink, and performing the first ECN operation on the uplink and the downlink.

36. The method according to claim 34 or 35, wherein
the performing a congestion monitoring and/or congestion reporting operation on an uplink comprises at least one of the following:
when congestion occurs on the uplink, enabling an uplink data packet to carry information indicating that congestion occurs, or enabling an uplink data packet to carry information indicating that congestion occurs on the uplink; and
sending the uplink data packet;
and/or
the performing an ECN operation for L4S on the uplink comprises at least one of the following:
when congestion corresponding to L4S occurs on the uplink, enabling an uplink data packet to carry information indicating that congestion occurs, or enabling an uplink data packet to carry information indicating that congestion occurs on the uplink; and
sending the uplink data packet;
and/or the performing the congestion monitoring and/or congestion reporting operation on a downlink comprises at least one of the following:
when congestion occurs on the downlink, enabling a downlink data packet to carry information indicating that congestion occurs, or enabling an uplink data packet to carry information indicating that congestion occurs on the downlink; and
sending the data packet;
and/or
the performing the ECN operation for L4S on the downlink comprises at least one of the following:
when congestion corresponding to L4S occurs on the downlink, enabling a downlink data packet to carry information indicating that congestion occurs, or enabling an uplink data packet to carry information indicating that congestion occurs on the downlink; and
sending the data packet;
and/or
the performing the ECN operation for L4S on the uplink and the downlink comprises the performing an ECN operation for L4S on the uplink and/or the performing the ECN operation for L4S on the downlink;
and/or
the performing a first ECN operation on the uplink comprises at least one of the following:
when congestion corresponding to ECN occurs on the uplink, enabling an uplink data packet to carry information indicating that congestion occurs, or enabling an uplink data packet to carry information indicating that congestion occurs on the uplink; and
sending the uplink data packet;
and/or
the performing the first ECN operation on the downlink comprises at least one of the following:
when congestion corresponding to ECN occurs on the downlink, enabling a downlink data packet to carry information indicating that congestion occurs, or enabling an uplink data packet to carry information indicating that congestion occurs on the downlink; and
sending the data packet; and
the performing the first ECN operation on the uplink and the downlink comprises the performing a first ECN operation on the uplink and/or the performing the first ECN operation on the downlink.

37. The method according to claim 34 or 35, wherein
the performing a congestion monitoring and/or congestion reporting operation on an uplink, the performing a first ECN operation on the uplink, or the performing an ECN operation for L4S on the uplink comprises at least one of the following:
enabling, on the basis that an uplink data packet carries information indicating that congestion occurs on the uplink, the uplink data packet to carry information indicating that congestion occurs; and
sending the uplink data packet;
and/or
the performing the congestion monitoring and/or congestion reporting operation on the downlink, the performing the first ECN operation on the downlink, or the performing the ECN operation for L4S on the downlink comprises at least one of the following:
enabling, on the basis that an uplink data packet carries information indicating that congestion occurs on the downlink, a downlink data packet to carry information indicating that congestion occurs; and
sending the downlink data packet.

38. The method according to claim 34 or 35, wherein in a case that a first condition is met, the fourth communication device performs the ECN operation for L4S on the uplink, or performs the congestion monitoring and/or congestion reporting operation on the uplink; and
the first condition comprises at least one of the following:
a value of ECN information of received uplink data of a first object is a first value;
a value of ECN information of received downlink data of the first object does not comprise a fourth value, or the value of the ECN information of the received downlink data of the first object is one of the following: the first value, a second value, and a third value;
congestion corresponding to L4S occurs on an uplink of the first object; and
a first requirement, a third requirement, or a seventh requirement corresponding to the first object is obtained,
wherein
the first requirement is used to require one of the following: performing the ECN operation for L4S on the uplink, and performing the congestion monitoring and/or congestion reporting operation on the uplink;
the third requirement is used to require one of the following: performing the ECN operation for L4S on the uplink and/or the downlink, and performing the congestion monitoring and/or congestion reporting operation on the uplink and/or the downlink;
the seventh requirement is used to require at least one of the following: performing the first ECN operation and/or the ECN operation for L4S on the uplink and/or the downlink, and performing the congestion monitoring and/or congestion reporting operation on the uplink and/or the downlink; and
the first object is one of the following: a first QoS flow, a radio bearer to which the first QoS flow is mapped, a logical channel to which the first QoS flow is mapped, and a terminal.

39. The method according to claim 34 or 35, wherein in a case that a second condition is met, the fourth communication device performs the ECN operation for L4S on the downlink, or performs the congestion monitoring and/or congestion reporting operation on the downlink; and
the second condition comprises at least one of the following:
a value of ECN information of received downlink data of a first object is a first value;
a value of ECN information of received uplink data of the first object does not comprise a fourth value, or the value of the ECN information of the received uplink data of the first object is one of the following: the first value, a second value, and a third value;
congestion corresponding to L4S occurs on a downlink of the first object; and
a second requirement, a third requirement, or a seventh requirement corresponding to the first object is obtained,
wherein
the second requirement is used to require one of the following: performing the ECN operation for L4S on the downlink, and performing the congestion monitoring and/or congestion reporting operation on the downlink;
the third requirement is used to require one of the following: performing the ECN operation for L4S on the uplink and/or the downlink, and performing the congestion monitoring and/or congestion reporting operation on the uplink and/or the downlink;
the seventh requirement is used to require at least one of the following: performing the first ECN operation and/or the ECN operation for L4S on the uplink and/or the downlink, and performing the congestion monitoring and/or congestion reporting operation on the uplink and/or the downlink; and
the first object is one of the following: a first QoS flow, a radio bearer to which the first QoS flow is mapped, a logical channel to which the first QoS flow is mapped, and a terminal.

40. The method according to claim 34 or 35, wherein in a case that a third condition is met, the fourth communication device performs the first ECN operation on the uplink, or performs the congestion monitoring and/or congestion reporting operation on the uplink; and
the third condition comprises at least one of the following:
a value of ECN information of received uplink data of a first object is a second value;
a value of ECN information of received downlink data of the first object does not comprise a fourth value, or the value of the ECN information of the received downlink data of the first object is one of the following: a first value, the second value, and a third value;
congestion corresponding to ECN occurs on an uplink of the first object; and
a fourth requirement, a sixth requirement, or a seventh requirement corresponding to the first object is obtained,
wherein
the fourth requirement is used to require one of the following: performing the first ECN operation on the uplink, and performing the congestion monitoring and/or congestion reporting operation on the uplink;
the sixth requirement is used to require one of the following: performing the first ECN operation on the uplink and/or the downlink, and performing the congestion monitoring and/or congestion reporting operation on the uplink and/or the downlink;
the seventh requirement is used to require at least one of the following: performing the first ECN operation and/or the ECN operation for L4S on the uplink and/or the downlink, and performing the congestion monitoring and/or congestion reporting operation on the uplink and/or the downlink; and
the first object is one of the following: a first QoS flow, a radio bearer to which the first QoS flow is mapped, a logical channel to which the first QoS flow is mapped, and a terminal.

41. The method according to claim 34 or 35, wherein in a case that a fourth condition is met, the fourth communication device performs the first ECN operation on the downlink, or performs the congestion monitoring and/or congestion reporting operation on the downlink; and
the fourth condition comprises at least one of the following:
a value of ECN information of received downlink data of a first object is a second value;
a value of ECN information of received uplink data of the first object does not comprise a fourth value, or the value of the ECN information of the received uplink data of the first object is one of the following: a first value, the second value, and a third value;
congestion corresponding to ECN occurs on a downlink of the first object; and
a fifth requirement, a sixth requirement, or a seventh requirement corresponding to the first object is obtained,
wherein
the fifth requirement is used to require one of the following: performing the first ECN operation on the downlink, and performing the congestion monitoring and/or congestion reporting operation on the downlink;
the sixth requirement is used to require one of the following: performing the first ECN operation on the uplink and/or the downlink, and performing the congestion monitoring and/or congestion reporting operation on the uplink and/or the downlink;
the seventh requirement is used to require at least one of the following: performing the first ECN operation and/or the ECN operation for L4S on the uplink and/or the downlink, and performing the congestion monitoring and/or congestion reporting operation on the uplink and/or the downlink; and
the first object is one of the following: a first QoS flow, a radio bearer to which the first QoS flow is mapped, a logical channel to which the first QoS flow is mapped, and a terminal.

42. The method according to any one of claims 34 to 41, before the performing, by a fourth communication device, a fourth operation, further comprising:
obtaining third information, wherein the third information comprises at least one of the following: an N^{th} requirement corresponding to a second object and data packet detection information; and
performing the fourth operation based on the third information, wherein
the data packet detection information comprises at least one of the following: ECN information, first data packet detection information, second data packet detection information, third data packet detection information, fourth data packet detection information, fifth data packet detection information, and sixth data packet detection information;
a value of N is one of the following: 1, 2, 3, 4, 5, 6, and 7;
the N^{th} requirement corresponding to the second object is used to require the N^{th} requirement to be performed on the second object; and
the second object comprises one of the following: the first QoS flow and the terminal.

43. The method according to any one of claims 38 to 42, wherein
a representation form of the N^{th} requirement comprises one of the following: explicit N^{th} indication information and an N^{th} QoS identifier;
and/or
the third requirement may be represented by using explicit first indication information or second indication information;
and/or
the sixth requirement may be represented by using explicit fourth indication information or fifth indication information,
wherein
the value of N is one of the following: 1, 2, 3, 4, 5, 6, and 7;
the N^{th} indication information is used to indicate the N^{th} requirement; and
the N^{th} QoS identifier is used to indicate the N^{th} requirement.

44. The method according to claim 43, wherein a value of the ECN information comprises at least one of the following:
the first value, wherein the first value is used to indicate that the ECN operation for L4S is supported and/or required;
the second value, wherein the second value is used to indicate that the first ECN operation is supported and/or required;
the third value, wherein the third value is used to indicate congestion experienced; and
the fourth value, wherein the fourth value is used to indicate that explicit congestion notification is not supported, wherein
the first ECN operation does not comprise the ECN operation for L4S.

45. The method according to claim 44, wherein
a representation form of the first value is one of the following: 10, 2, and ECT(1);
a representation form of the second value is one of the following: 01, 1, and ECT(0);
a representation form of the third value is one of the following: 11, 3, and congestion experienced CE; and
a representation form of the fourth value is one of the following: 00, 0, and no ECN.

46. The method according to claim 44, wherein
the first data packet detection information is used to detect a data flow whose uplink data carries the first value;
and/or
the second data packet detection information is used to detect a data flow whose downlink data carries the first value;
and/or
the third data packet detection information is used to detect a data flow whose uplink data carries the second value;
and/or
the fourth data packet detection information is used to detect a data flow whose downlink data carries the second value;
and/or
the fifth data packet detection information is used to detect a data flow whose uplink data carries the third value;
and/or
the sixth data packet detection information is used to detect a data flow whose downlink data carries the third value;
and/or
the seventh data packet detection information is used to detect a data flow whose uplink data and/or downlink data carry or carries the first value;
and/or
the eighth data packet detection information is used to detect a data flow whose uplink data and/or downlink data carry or carries the second value;
and/or
the ninth data packet detection information is used to detect a data flow whose uplink data and/or downlink data carry or carries the first value or the second value.

47. The method according to claim 44 or 46, wherein
the first data packet detection information comprises one of the following: the first value, and the first value and first source interface information;
the second data packet detection information comprises one of the following: the first value, and the first value and second source interface information;
the third data packet detection information comprises one of the following: the second value, and the second value and the first source interface information;
the fourth data packet detection information comprises one of the following: the second value, and the second value and the second source interface information;
the fifth data packet detection information comprises one of the following: the third value, and the third value and the first source interface information;
the sixth data packet detection information comprises one of the following: the third value, and the third value and the second source interface information;
the seventh data packet detection information comprises the first value;
the seventh data packet detection information comprises the second value; and
the eighth data packet detection information comprises at least one of the following: the first value and the second value, wherein
the first source interface information is capable of being used to indicate that a data direction is the uplink; and
the second source interface information is capable of being used to indicate that the data direction is the downlink.

48. The method according to claim 47, wherein
the first data packet detection information or the fourth data packet detection information further comprises ECN information used to detect downlink data;
and/or
the second data packet detection information or the fifth data packet detection information further comprises ECN information used to detect uplink data,
wherein
a value of the ECN information used to detect downlink data comprises one of the following: the second value, the second value, and the third value; or the value of the ECN information used to detect downlink data does not comprise the fourth value; and
a value of the ECN information used to detect uplink data comprises any one of the following: the second value, the second value, and the third value; or the value of the ECN information used to detect uplink data does not comprise the fourth value.

49. An information processing apparatus, applied to a first communication device, wherein the information processing apparatus comprises:
a processing module, configured to perform a first operation, wherein the first operation comprises at least one of the following:
determining data packet detection information, wherein the data packet detection information comprises at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information;
sending the data packet detection information;
mapping a plurality of data flows to a same QoS flow;
mapping a data flow 1 and a data flow 2 to different QoS flows;
configuring an N^{th} requirement for a QoS flow; and
sending the N^{th} requirement corresponding to the QoS flow, wherein
a value of N is one of the following: 1, 2, 3, 4, 5, 6, and 7;
the first requirement is used to require one of the following: performing an ECN operation for L4S on an uplink, and performing a congestion monitoring and/or congestion reporting operation on the uplink;
the second requirement is used to require one of the following: performing the ECN operation for L4S on a downlink, and performing the congestion monitoring and/or congestion reporting operation on the downlink;
the third requirement is used to require one of the following: performing the ECN operation for L4S on the uplink and/or the downlink, and performing the congestion monitoring and/or congestion reporting operation on the uplink and/or the downlink;
the fourth requirement is used to require one of the following: performing a first ECN operation on the uplink, and performing the congestion monitoring and/or congestion reporting operation on the uplink;
the fifth requirement is used to require one of the following: performing the first ECN operation on the downlink, and performing the congestion monitoring and/or congestion reporting operation on the downlink;
the sixth requirement is used to require one of the following: performing the first ECN operation on the uplink and/or the downlink, and performing the congestion monitoring and/or congestion reporting operation on the uplink and/or the downlink; and
the seventh requirement is used to require at least one of the following: performing the first ECN operation and/or the ECN operation for L4S on the uplink and/or the downlink, and performing the congestion monitoring and/or congestion reporting operation on the uplink and/or the downlink.

50. An information processing apparatus, applied to a second communication device, wherein the information processing apparatus comprises:
a processing module, configured to perform a second operation, wherein the second operation comprises at least one of the following:
determining policy control request trigger information, wherein the policy control request trigger information is used to require reporting to be performed in a case that a data flow that conforms to data packet detection information is detected;
determining the data packet detection information, wherein the data packet detection information is used to detect a data flow that conforms to the data packet detection information;
sending the data packet detection information;
sending the policy control request trigger information; and
configuring an N^{th} requirement for a data flow, wherein
the data packet detection information comprises at least one of the following: ECN information, first data packet detection information, second data packet detection information, third data packet detection information, fourth data packet detection information, fifth data packet detection information, sixth data packet detection information, seventh data packet detection information, eighth data packet detection information, and ninth data packet detection information;
a value of N is one of the following: 1, 2, 3, 4, 5, 6, and 7;
the first requirement is used to require one of the following: performing an ECN operation for L4S on an uplink, and performing a congestion monitoring and/or congestion reporting operation on the uplink;
the second requirement is used to require one of the following: performing the ECN operation for L4S on a downlink, and performing the congestion monitoring and/or congestion reporting operation on the downlink;
the third requirement is used to require one of the following: performing the ECN operation for L4S on the uplink and/or the downlink, and performing the congestion monitoring and/or congestion reporting operation on the uplink and/or the downlink;
the fourth requirement is used to require one of the following: performing a first ECN operation on the uplink, and performing the congestion monitoring and/or congestion reporting operation on the uplink;
the fifth requirement is used to require one of the following: performing the first ECN operation on the downlink, and performing the congestion monitoring and/or congestion reporting operation on the downlink;
the sixth requirement is used to require one of the following: performing the first ECN operation on the uplink and/or the downlink, and performing the congestion monitoring and/or congestion reporting operation on the uplink and/or the downlink; and
the seventh requirement is used to require at least one of the following: performing the first ECN operation and/or the ECN operation for L4S on the uplink and/or the downlink, and performing the congestion monitoring and/or congestion reporting operation on the uplink and/or the downlink.

51. An information processing apparatus, applied to a third communication device, wherein the information processing apparatus comprises:
an obtaining module, configured to obtain data packet detection information, wherein the data packet detection information is used to detect a data flow that conforms to the data packet detection information; and
a processing module, configured to perform a third operation based on the data packet detection information, wherein the third operation comprises:
detecting or filtering a target data flow;
reporting first information in a case that the target data flow is detected, wherein the first information is used to indicate that the target data flow starts; and
reporting second information in a case that the target data flow is no longer detected, wherein the second information is used to indicate that the target data flow ends, wherein
the target data flow is a data flow that conforms to the data packet detection information; and
the data packet detection information comprises at least one of the following: ECN information, source interface information, first data packet detection information, second data packet detection information, third data packet detection information, fourth data packet detection information, fifth data packet detection information, sixth data packet detection information, seventh data packet detection information, eighth data packet detection information, and ninth data packet detection information.

52. An information processing apparatus, applied to a fourth communication device, wherein the information processing apparatus comprises:
a processing module, configured to perform a fourth operation, wherein the performing a fourth operation comprises at least one of the following:
performing a congestion monitoring and/or congestion reporting operation on an uplink;
performing the congestion monitoring and/or congestion reporting operation on a downlink; and
performing the congestion monitoring and/or congestion reporting operation on the uplink and the downlink.

53. A communication device, comprising a processor, a memory, and a computer program that is stored in the memory and that is capable of running on the processor, wherein when the computer program is executed by the processor, the steps of the information processing method according to any one of claims 1 to 14 are implemented, or the steps of the information processing method according to any one of claims 15 to 26 are implemented, or the steps of the information processing method according to any one of claims 27 to 33 are implemented, or the steps of the information processing method according to any one of claims 34 to 48 are implemented.

54. A readable storage medium, wherein the readable storage medium stores a program or instructions, and when the program or the instructions are executed by a processor, the steps of the information processing method according to any one of claims 1 to 14 are implemented, or the steps of the information processing method according to any one of claims 15 to 26 are implemented, or the steps of the information processing method according to any one of claims 27 to 33 are implemented, or the steps of the information processing method according to any one of claims 34 to 48 are implemented.
